(19) Europäisches Patentamt
European Patent Office
Office européen des brevets

(11) **EP 1 661 286 B1**

(12) **FASCICULE DE BREVET EUROPEEN**

(45) Date de publication et mention de la délivrance du brevet:
**29.07.2009 Bulletin 2009/31**

(21) Numéro de dépôt: **04717668.0**

(22) Date de dépôt: **05.03.2004**

(51) Int Cl.:
**H04L 1/06** $^{(2006.01)}$

(86) Numéro de dépôt international:
**PCT/FR2004/000538**

(87) Numéro de publication internationale:
**WO 2005/029757 (31.03.2005 Gazette 2005/13)**

(54) **RÉCEPTEUR ET PROCÉDÉ DE DÉCODAGE D'UN SIGNAL CODÉ A L'AIDE D'UNE MATRICE DE CODAGE ESPACE-TEMPS OU ESPACE-FRÉQUENCE**

EMPFÄNGER UND VERFAHREN ZUR DEKODIERUNG EINES KODIERTEN SIGNALS MIT HILFE EINER RAUMZEIT- ODER RAUMFREQUENZKODIERUNGSMATRIX

RECEIVER AND METHOD FOR DECODING A CODED SIGNAL WITH THE AID OF A SPACE-TIME OR SPACE-FREQUENCY CODING MATRIX

(84) Etats contractants désignés:
**AT BE BG CH CY CZ DE DK EE ES FI FR GB GR HU IE IT LI LU MC NL PL PT RO SE SI SK TR**

(30) Priorité: **01.09.2003 FR 0310360**

(43) Date de publication de la demande:
**31.05.2006 Bulletin 2006/22**

(73) Titulaire: **FRANCE TELECOM**
**75015 Paris (FR)**

(72) Inventeurs:
• **HELARD, Maryline**
**F-35700 Rennes (FR)**
• **BOUVET, Pierre-Jean**
**F-44100 Nantes (FR)**
• **LE NIR, Vincent**
**F-61100 Flers (FR)**
• **LE GOUABLE, Rodolphe**
**F-35510 Cesson-Sevigne (FR)**

(74) Mandataire: **Bioret, Ludovic**
**Cabinet Vidon**
**16 B, rue de Jouanet - B.P. 90333**
**35703 Rennes Cedex 07 (FR)**

(56) Documents cités:
**EP-A- 1 133 071**

• **TAO M ET AL: "Low complexity post-ordered iterative decoding for generalized layered space time coding systems" ICC 2001. 2001 IEEE INTERNATIONAL CONFERENCE ON COMMUNICATIONS. CONFERENCE RECORD. HELSINKY, FINLAND, JUNE 11 - 14, 2001, IEEE INTERNATIONAL CONFERENCE ON COMMUNICATIONS, NEW YORK, NY: IEEE, US, vol. 1 OF 10, 11 juin 2001 (2001-06-11), pages 1137-1141, XP010553506 ISBN: 0-7803-7097-1**
• **JAEYOUNG KWAK ET AL: "A blind space-time adaptive multiuser detector for DS-CDMA communication systems" COMMUNICATIONS, 1998. ICC 98. CONFERENCE RECORD. 1998 IEEE INTERNATIONAL CONFERENCE ON ATLANTA, GA, USA 7-11 JUNE 1998, NEW YORK, NY, USA, IEEE, US, 7 juin 1998 (1998-06-07), pages 1069-1073, XP010284711 ISBN: 0-7803-4788-9**
• **HAYOUNG YANG ET AL: "Performance of space-time trellis codes in frequency selective wcdma systems" VTC 2002-FALL. 2002 IEEE 56TH. VEHICULAR TECHNOLOGY CONFERENCE PROCEEDINGS. VANCOUVER, CANADA, SEPT. 24 - 28, 2002, IEEE VEHICULAR TECHNOLGY CONFERENCE, NEW YORK, NY: IEEE, US, vol. 1 OF 4. CONF. 56, 24 septembre 2002 (2002-09-24), pages 233-237, XP010608552 ISBN: 0-7803-7467-3**

**Description**

Le domaine de l'invention est celui des communications numériques sans fil. Plus précisément, l'invention concerne la réception, et notamment le décodage de signaux reçus dans un récepteur par l'intermédiaire d'un ou plusieurs canaux de transmission.

Plus précisément encore, l'invention concerne le décodage itératif de données codées à l'aide d'une matrice de codage espace-temps non orthogonale.

L'invention s'applique ainsi notamment, mais non exclusivement, aux systèmes de transmission mettant en oeuvre une pluralité d'antennes (au moins deux) à l'émission et/ou à la réception. Ainsi, l'invention est bien adaptée aux récepteurs pour codes espace-temps non-orthogonaux à Nt (Nt≥2) antennes d'émission et Nr (Nr ≥1) antennes de réception (systèmes « MIMO » : en anglais « Multiple Inputs Multiple Outputs », ou en français : « Entrées Multiples Sorties Multiples » et « MISO » : en anglais « Multiple Inputs Single Output », ou en français : « Entrées Multiples Sortie Unique»).

Un exemple d'application de l'invention est le domaine des radiocommunications, notamment pour les systèmes de troisième, quatrième générations et suivantes.

Pour de tels systèmes au delà de deux antennes d'émission, les codes espaces-temps à rendement unitaire sont non orthogonaux. C'est par exemple le cas des codes de Tirkkonen [6] et de Jafarkhani [7] (les références cités dans la présente demande de brevet sont regroupées en annexe 1).

La non-orthogonalité inéluctable de ces codes conduit généralement à des récepteurs complexes à mettre en oeuvre, devant utiliser un décodage à maximum de vraisemblance (« Maximum Likelihood » en anglais), ou de type sphérique. La complexité de mise en oeuvre de ces algorithmes augmente de façon exponentielle en fonction du nombre d'antennes et du nombre d'états de la modulation. Les techniques de décodage de codes espace-temps non-orthogonaux ont donc pour inconvénient majeur, dans les systèmes de réception, lorsque des codes espace-temps à rendement unitaire sont utilisés, une complexité de mise en oeuvre. Les techniques non-itératives antérieures sont basées sur le critère de Maximum de vraisemblance (ML).

Elles sont d'une réalisation très complexe voire impossible au vu de l'avancée technologique actuelle, dès que le nombre d'antennes ou le nombre d'états de la modulation croit, puisque la complexité de mise en oeuvre croit exponentiellement avec le nombre d'états du treillis à traiter.

Depuis peu, des procédés itératifs associant des codes espace-temps ont été publiés :

- Dans [1], Tujkovic présente des "turbo"codes espace-temps en treillis récursifs. La réception s'effectue de façon itérative (tout comme les turbo-codes) en utilisant des décodeurs MAP (Maximum A Posteriori) ;
- Dans [2], S. Jayaweera étudie la concaténation d'un code convolutif avec un code espace-temps unitaire. Le décodage se fait itérativement par le biais d'algorithmes MAP ;
- Enfin dans [3], A. Guillen et G. Caire analysent les performances de codes espaces-temps particuliers (« Natural space-time codes et threaded space-time codes » en anglais). Ils utilisent un annuleur d'interférence itératif pour séparer les contributions apportées par les différentes antennes d'émission ;
- Dans [4], Bauch utilise un système itératif qui vise à supprimer l'interférence inter-symboles introduite par les différents canaux. Les éléments utilisés à chaque itération font intervenir des décodeurs de type MAP (Maximum a posteriori).

Ces techniques itératives antérieures s'appliquent à certaines classes de codes espace-temps et utilisent pour la plupart des égaliseurs (ou détecteurs) non linéaires également complexe à mettre en oeuvre. L'amélioration des performances peut se faire en concaténant un code convolutif de canal (ou même un turbo-code) avec le code espace-temps à l'émission.

L'article [5] de A. Boariu et M. Ionescu présente une classe de codes espaces-temps en bloc quasi-orthogonaux à interférence minimale. Ces codes peuvent se décoder suivant une méthode itérative d'annulation d'interférences.

La technique présentée dans [5] se limite à 4 antennes, à la modulation QPSK (4 états) et à un rendement égal à 1. Elle ne peut pas être mise en oeuvre de façon efficace et performante avec de nombreuses approches, par exemple dans un système de type CDMA. De plus le filtre adapté MRC (Maximum Ratio Combining) s'avère peu performant avec d'autres types de codes que celui proposé.

Par ailleurs, l'approche de Boariu suppose que la matrice utilisée soit de même taille que le code espace-temps. On connait également une technique de décodage décrite dans le document de brevet EP-1133071, reposant sur une approche itérative, chaque itération comprenant un prédécodage de diversité, une estimation des symboles puis un décodage de diversité.

L'invention a pour objectif de pallier ces différents inconvénients de l'état de l'art.

Plus précisément, un objectif de l'invention est de fournir une technique de décodage de codes espace-temps qui soit plus efficace que les techniques connues, tout en présentant une complexité réduite.

Ainsi, un objectif de l'invention est de fournir une telle technique, mettant en oeuvre une matrice de codage espace-temps non orthogonale, mais ne reposant pas sur un critère de maximum de vraisemblance.

En d'autres termes, l'invention a pour objectif de fournir une telle technique, qui puisse être mise en oeuvre de façon pratique et réaliste, dans des récepteurs à coût acceptable, dans un système mettant en oeuvre un nombre élevé d'antennes (4, 8 ou plus) et/ou une modulation à un grand nombre d'états.

Un autre objectif de l'invention est de fournir une telle technique, plus efficace notamment que celle proposée par Boariu, et qui ne soit pas limitée à une classe de codes particulière, mais au contraire applicable à tous les codes espace-temps en blocs, quel que soit leur rendement De même, un objectif de l'invention est de permettre l'utilisation de matrices de taille supérieure à la taille du codage espace-temps.

Ces objectifs, ainsi que d'autres qui apparaîtront plus clairement par la suite, peuvent être atteints à l'aide d'un procédé de décodage selon la revendication 1.

L'approche de l'invention tire ainsi parti d'un précodage de diversité pour optimiser la qualité du décodage. Pour cela, lors de chacune des itérations, on effectue un prédécodage correspondant, on estime les symboles, puis on refait un précodage sur ces symboles estimés.

Ledit précodage peut notamment être obtenu par l'une des méthodes suivantes :

- étalement de spectre ;
- précodage linéaire.

Ainsi, l'invention s'applique à tous les systèmes mettant en oeuvre une technique OFDM, CDMA, MC-CDMA ou similaire, ou encore un prédécodage linéaire tel que décrit dans [10].

Selon un mode de réalisation avantageux de l'invention, le procédé met en oeuvre une étape de contrôle automatique de gain, avant ou après ladite étape d'égalisation et/ou lors d'au moins une desdites itérations,

Le procédé de l'invention peut avantageusement comprendre une étape de décodage de canal, symétrique d'une étape de codage de canal mis en oeuvre à l'émission.

Cette étape de décodage de canal peut notamment mettre en oeuvre un turbo-décodage, le cas échéant avec un nombre variable d'itérations de turbo-décodage à l'intérieur de chacune des itérations de l'invention.

Selon une variante avantageuse, mettant en oeuvre un codage de canal, le procédé comprend les étapes suivantes :

- diagonalisation, obtenue à partir d'une matrice globale de codage/canal/décodage tenant compte au moins de ladite matrice de codage, d'une matrice de décodage, correspondant à la matrice transposée conjuguée de ladite matrice de codage ;
- démodulation, symétrique à une modulation mise en oeuvre à l'émission ;
- désentrelacement, symétrique à un entrelacement mis en oeuvre à l'émission ;
- décodage de canal, symétrique à un codage de canal mis en oeuvre à l'émission ;
- ré-entrelacement, identique à celui mis en oeuvre à l'émission ;
- re-modulation, identique à celle mise en oeuvre à l'émission, délivrant un signal estimé ;
- au moins une itération d'une étape d'annulation d'interférence, comprenant une soustraction à un signal égalisé dudit signal estimé multiplié par une matrice d'interférence, délivrant un signal optimisé.

Le procédé peut également comprendre au moins une étape de désentrelacement et au moins une étape de ré-entrelacement, correspondant à un entrelacement mis en oeuvre à l'émission.

Avantageusement, il peut encore comprendre une étape d'amélioration d'une estimation de canal, tenant compte des données estimées lors d'au moins une desdites itérations.

De façon avantageuse, le procédé de décodage comprend les étapes suivantes:

- décodage espace-temps, inverse du codage espace-temps mis en oeuvre à l'émission, délivrant un signal décodé ;
- égalisation dudit signal décodé, délivrant un signal égalisé ;
- diagonalisation, par multiplication dudit signal égalisé par une matrice aboutissant à une matrice globale de codage/canal/décodage diagonale tenant compte au moins de ladite matrice de codage, d'une matrice de décodage, correspondant à la matrice transposée conjuguée de ladite matrice de codage ;
- prédécodage de diversité, inverse d'un précodage de diversité mis en oeuvre à l'émission dudit signal, délivrant des données prédécodées ;
- estimation des symboles formant ledit signal, à partir desdites données prédécodées, délivrant des symboles estimés ;
- précodage de diversité, identique audit précodage de diversité mis en oeuvre lors de l'émission, appliqué sur lesdits symboles estimés, pour fournir un signal estimé ;

- au moins une itération d'une étape d'annulation d'interférence, mettant en oeuvre les sous-étapes suivantes :

  - soustraction audit signal égalisé dudit signal estimé multiplié par une matrice d'interférence, délivrant un signal optimisé ;
  - prédécodage de diversité dudit signal optimisé, inverse d'un précodage de diversité mis en oeuvre à l'émission dudit signal, délivrant des données prédécodées ;
  - estimation des symboles formant ledit signal optimisé, à partir des données prédécodées, délivrant de nouveaux symboles estimés ;
  - précodage de diversité (sauf pour la dernière itération), identique audit précodage de diversité mis en oeuvre lors de l'émission, appliqué sur lesdits nouveaux symboles estimés pour fournir un nouveau signal estimé, sauf pour la dernière itération.

On obtient ainsi une efficacité supérieure aux techniques connues, avec une approche applicable à tous les codes espace-temps en blocs.

L'invention concerne également un système à une seule itération ne comprenant que les sous-étapes suivantes :

- décodage espace-temps, inverse du codage espace-temps mis en oeuvre à l'émission, délivrant un signal décodé ;
- égalisation dudit signal décodé, délivrant un signal égalisé ;
- diagonalisation, par multiplication dudit signal égalisé par une matrice aboutissant à une matrice globale de codage/canal/décodage diagonale tenant compte au moins de ladite matrice de codage, d'une matrice de décodage, correspondant à la matrice transposée conjuguée de ladite matrice de codage ;
- prédécodage de diversité, inverse d'un précodage de diversité mis en oeuvre à l'émission dudit signal, délivrant des données prédécodées ;
- estimation des symboles formant ledit signal, à partir desdites données prédécodées, délivrant des symboles estimés ;

Pour certains systèmes, ces sous-étapes suffisent en effet pour obtenir un gain acceptable.On obtient ainsi une efficacité supérieure aux techniques connues, avec une approche applicable à tous les codes espace-temps en blocs.

Dans des modes de réalisation particuliers, lesdites étapes de décodage espace-temps et d'égalisation et/ou lesdites étapes d'égalisation et de transformation peuvent être effectuées conjointement.

Selon une caractéristique avantageuse, lesdits symboles codés sont émis à l'aide d'au moins deux antennes. Le récepteur tient alors compte globalement des différents canaux de transmission correspondants.

L'invention peut également s'appliquer à un système à une seule antenne d'émission. Le nombre d'antennes de réception peut également être variable. Préférentiellement, ladite étape d'égalisation met en oeuvre une égalisation selon une des techniques appartenant au groupe comprenant :

- égalisation de type MMSE ;
- égalisation de type EGC ;
- égalisation de type ZF ;
- égalisation tenant compte d'une information représentative du rapport signal à bruit entre le signal reçu et le bruit de réception.

Ces techniques sont bien connues, dans d'autres applications.

On notera que la mise en oeuvre d'une égalisation, et non d'un filtrage adapté comme proposé par Boariu, permet d'obtenir une meilleure efficacité.

Selon un mode de réalisation avantageux, lesdites étapes d'estimation de symboles mettent en oeuvre une décision souple, associant une information de confiance à une décision, et en ce que la ou lesdites étapes de soustraction tiennent compte desdites informations de confiance.

Bien sûr, on peut également mettre en oeuvre une décision dure.

Il est possible d'intégrer l'étape d"égalisation dans l'étape de diagonalisation. Dans ce cas, le signal diagonalisé est égal au signal décodé multiplié par la matrice inverse de la somme de la matrice globale codage/canal/décodage et de la matrice de variance du bruit.

De façon avantageuse, ledit signal reçu est un signal multiporteuse, le récepteur comprenant des moyens de traitement correspondants. Avec du précodage et de l'OFDM, le codage devient un codage espace-temps-fréquence.

Dans certains modes de réalisation, ledit code espace-temps peut présenter un rendement différent de 1.

De façon avantageuse, ledit procédé met en oeuvre une étape de contrôle automatique de gain, avant ou après ladite étape d'égalisation et/ou lors desdites itérations,

Selon un premier mode de réalisation particulier, ledit signal émis étant transmis à l'aide de quatre antennes, ladite matrice globale vaut :

$$G = \gamma \begin{bmatrix} A & 0 & 0 & J \\ 0 & A & -J & 0 \\ 0 & -J & A & 0 \\ J & 0 & 0 & A \end{bmatrix}$$

avec :

$$A = |h_1|^2 + |h_2|^2 + |h_3|^2 + |h_4|^2$$

$$J = 2\mathrm{Re}\{h_1 h_4^* - h_2 h_3^*\} \,,$$

représentant l'interférence, et

$$\gamma = \frac{1}{|h_1|^2 + |h_2|^2 + |h_3|^2 + |h_4|^2 + \dfrac{1}{SNR}}$$

où:

$$H = \begin{bmatrix} h_1 & h_2 & h_3 & h_4 \\ -h_2^* & h_1^* & -h_4^* & h_3^* \\ -h_3^* & -h_4^* & h_1^* & h_2^* \\ h_4 & -h_3 & -h_2 & h_1 \end{bmatrix}$$

est une matrice regroupant le codage espace-temps et le canal de transmission, et SNR représente le rapport signal à bruit.

Selon un autre mode de réalisation particulier, ledit signal reçu étant transmis à l'aide de huit antennes, ladite matrice globale vaut :

$$G = \gamma \cdot H^H \cdot H = \gamma \begin{bmatrix} A & 0 & 0 & 0 & J & 0 & 0 & 0 \\ 0 & A & 0 & 0 & 0 & J & 0 & 0 \\ 0 & 0 & A & 0 & 0 & 0 & J & 0 \\ 0 & 0 & 0 & A & 0 & 0 & 0 & J \\ J & 0 & 0 & 0 & A & 0 & 0 & 0 \\ 0 & J & 0 & 0 & 0 & A & 0 & 0 \\ 0 & 0 & J & 0 & 0 & 0 & A & 0 \\ 0 & 0 & 0 & J & 0 & 0 & 0 & A \end{bmatrix}$$

avec

$$A = \left|h_1\right|^2 + \left|h_2\right|^2 + \left|h_3\right|^2 + \left|h_4\right|^2 + \left|h_5\right|^2 + \left|h_6\right|^2 + \left|h_7\right|^2 + \left|h_8\right|^2$$

et

$$J = 2\operatorname{Im}\left\{h_1 h_5^* + h_2 h_6^* + h_3 h_7^* + h_4 h_8^*\right\}$$

et

$$\gamma = \frac{1}{\left|h_1\right|^2 + \left|h_2\right|^2 + \left|h_3\right|^2 + \left|h_4\right|^2 + \left|h_5\right|^2 + \left|h_6\right|^2 + \left|h_7\right|^2 + \left|h_8\right|^2 + \dfrac{1}{SNR}}$$

où :

$$H = \begin{bmatrix}
h_1 & h_2 & h_3 & h_4 & h_5 & h_6 & h_7 & h_8 \\
h_2 & -h_1 & h_4 & -h_3 & h_6 & -h_5 & h_8 & -h_7 \\
h_3 & -h_4 & -h_1 & h_2 & h_7 & -h_8 & -h_5 & h_6 \\
h_4 & h_3 & -h_2 & -h_1 & h_8 & h_7 & -h_6 & -h_5 \\
h_1^* & h_2^* & h_3^* & h_4^* & h_5^* & h_6^* & h_7^* & h_8^* \\
h_2^* & -h_1^* & h_4^* & -h_3^* & h_6^* & -h_5^* & h_8^* & -h_7^* \\
h_3^* & -h_4^* & -h_1^* & h_2^* & h_7^* & -h_8^* & -h_5^* & h_6^* \\
h_4^* & h_3^* & -h_2^* & -h_1^* & h_8^* & h_7^* & -h_6^* & -h_5^* \\
h_5 & h_6 & h_7 & h_8 & h_1 & h_2 & h_3 & h_4 \\
h_6 & -h_5 & h_8 & -h_7 & h_2 & -h_1 & h_4 & -h_3 \\
h_7 & -h_8 & -h_5 & h_6 & h_3 & -h_4 & -h_1 & h_2 \\
h_8 & h_7 & -h_6 & -h_5 & h_4 & h_3 & -h_2 & -h_1 \\
h_5^* & h_6^* & h_7^* & h_8^* & h_1^* & h_2^* & h_3^* & h_4^* \\
h_6^* & -h_5^* & h_8^* & -h_7^* & h_2^* & -h_1^* & h_4^* & -h_3^* \\
h_7^* & -h_8^* & -h_5^* & h_6^* & h_3^* & -h_4^* & -h_1^* & h_2^* \\
h_8^* & h_7^* & -h_6^* & -h_5^* & h_4^* & h_3^* & -h_2^* & -h_1^*
\end{bmatrix}$$

est une matrice regroupant le codage espace-temps et le canal de transmission, et SNR représente le rapport signal à bruit.

L'invention concerne également un procédé de codage et de décodage, selon lequel le codage met en oeuvre une matrice de codage espace-temps telle que :

$$H = \begin{bmatrix}
h_1 & h_2 & h_3 & h_4 & h_5 & h_6 & h_7 & h_8 \\
h_2 & -h_1 & h_4 & -h_3 & h_6 & -h_5 & h_8 & -h_7 \\
h_3 & -h_4 & -h_1 & h_2 & h_7 & -h_8 & -h_5 & h_6 \\
h_4 & h_3 & -h_2 & -h_1 & h_8 & h_7 & -h_6 & -h_5 \\
h_1^* & h_2^* & h_3^* & h_4^* & h_5^* & h_6^* & h_7^* & h_8^* \\
h_2^* & -h_1^* & h_4^* & -h_3^* & h_6^* & -h_5^* & h_8^* & -h_7^* \\
h_3^* & -h_4^* & -h_1^* & h_2^* & h_7^* & -h_8^* & -h_5^* & h_6^* \\
h_4^* & h_3^* & -h_2^* & -h_1^* & h_8^* & h_7^* & -h_6^* & -h_5^* \\
h_5 & h_6 & h_7 & h_8 & h_1 & h_2 & h_3 & h_4 \\
h_6 & -h_5 & h_8 & -h_7 & h_2 & -h_1 & h_4 & -h_3 \\
h_7 & -h_8 & -h_5 & h_6 & h_3 & -h_4 & -h_1 & h_2 \\
h_8 & h_7 & -h_6 & -h_5 & h_4 & h_3 & -h_2 & -h_1 \\
h_5^* & h_6^* & h_7^* & h_8^* & h_1^* & h_2^* & h_3^* & h_4^* \\
h_6^* & -h_5^* & h_8^* & -h_7^* & h_2^* & -h_1^* & h_4^* & -h_3^* \\
h_7^* & -h_8^* & -h_5^* & h_6^* & h_3^* & -h_4^* & -h_1^* & h_2^* \\
h_8^* & h_7^* & -h_6^* & -h_5^* & h_4^* & h_3^* & -h_2^* & -h_1^*
\end{bmatrix},$$

et le décodage est un décodage tel que décrit ci-dessus.

L'invention concerne encore les récepteurs mettant en oeuvre des moyens de décodage réalisant le procédé décrit précédemment.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :

- la figure 1 présente le principe du codage et du décodage de Jafarkhani, connu en soi ;
- la figure 2 illustre la structure générale itérative du décodage ;
- la figure 3 présente la première itération du schéma de la figure 2 ;
- la figure 4 présente la structure des itérations suivantes du schéma de la figure 2 ;
- la figure 5 illustre les performances de l'approche itérative, comparées à celles du décodage de la figure 1 ;
- les figures 6 et 7 illustrent les performances de l'approche itérative, avec deux autres codes et 8 antennes d'émission ;
- la figure 8 est un schéma général de l'approche de l'invention, mettant en oeuvre un précodage de diversité linéaire ;
- la figure 9 illustre la première itération de la figure 8 ;
- la figure 10 illustre les itérations suivantes de la figure 8 ;
- la figure 11 présente les performances du procédé de la figure 8, comparé à des décodages connus ;
- la figure 12 illustre un autre mode de réalisation de l'invention, mettant en oeuvre un précodage par étalement de spectre ;
- les figures 13 et 14 présentent respectivement la première itération et les suivantes du schéma de la figure 12 ;
- la figure 15 présente les performances du procédé de la figure 12, comparé à des décodages connus ;
- les figures 16 à 18 illustrent un autre mode de réalisation de l'invention dans lequel on met en oeuvre également un codage de canal ;
- les figures 19 à 21 illustrent encore un autre mode de réalisation de l'invention dans lequel on met en oeuvre également un codage de canal et un précodage ;
- les figures 22 et 23 présentent un mode de réalisation de l'invention selon lequel on effectue une diagonalisation et une égalisation conjointes ;
- la figure 24 présente une variante de l'invention, mettant en oeuvre une estimation de canal.

L'invention propose donc une nouvelle approche, plus efficace et simple à mettre en oeuvre, du décodage des codes espace-temps. Pour cela, elle propose notamment de mettre en oeuvre, au codage, un précodage de diversité (par étalement de spectre ou précodage linéaire), et un traitement itératif à la réception. Selon l'invention, on effectue à chaque itération un décodage puis un recodage correspondant à ce précodage. Cela permet d'obtenir une estimation de plus en plus précise des symboles émis, et de supprimer du signal reçu de façon de plus en plus efficace, les interférences dues à la transmission.

La première itération est particulière : elle comprend une diagonalisation (la matrice globale n'étant pas, à l'origine diagonale). Elle est précédée d'une égalisation du signal reçu.

Les itérations suivantes sont toutes identiques : on affine l'estimation en soustrayant au fur et à mesure les effets des interférences.

Pour faciliter la compréhension de l'invention, on présente tout d'abord rapidement l'approche connue de Jafarkhani (§ 1), puis l'approche itérative, sans utilisation d'un précodage pour un code à 4 antennes (§ 2), puis deux codes à 8 antennes, respectivement un code connu (§ 3) et un nouveau code (§ 4). Ensuite, on présente deux exemples de décodage de l'invention, utilisant respectivement un précodage linéaire (§ S) et un précodage par étalement de spectre (§ 6).

## 1. Approche de Jafarkhani

### 1.1 Introduction

Ce code espace-temps à quatre antennes d'émissions et une antenne de réception et à rendement unitaire a été introduit par H. Jafarkhani dans 7.

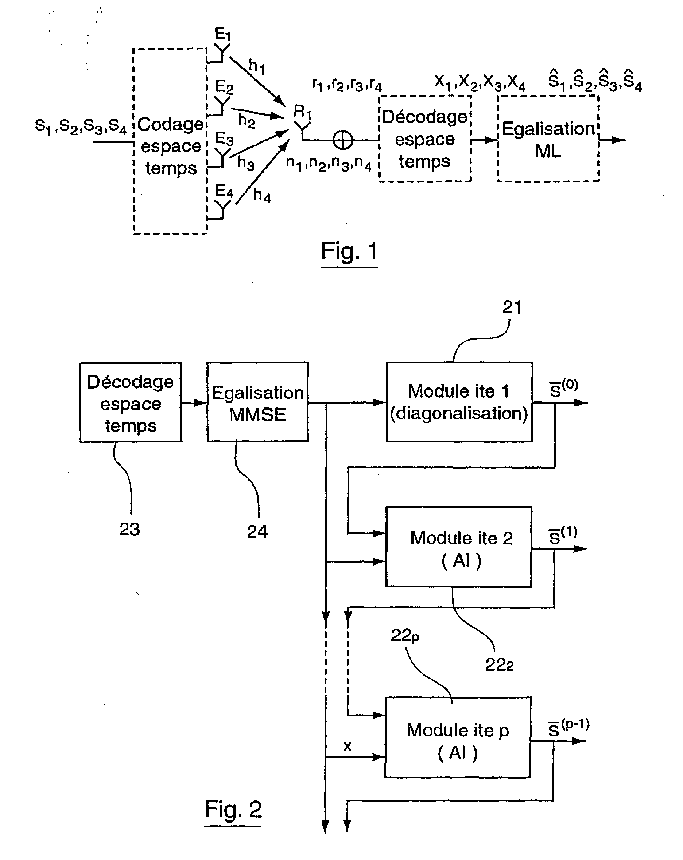

Pour une modulation numérique à M états de phase, la figure 1 décrit le schéma de communication comprenant 4 antennes d'émission, E1, E2, E3 et E4 et une antenne de réception R1. Les 4 canaux de propagation, c'est-à-dire E1-R1,E2-R1, E3-R1 et E4-R1, sont considérés sans interférence entre symbole (« fading » plat) et constants pendant quatre intervalles d'émission consécutifs, IT1, IT2, IT3 et IT4.

On nomme h1, h2, h3 et h4 leurs coefficients respectifs complexes d'évanouissement. On suppose, que les hi suivent une loi de Rayleigh indépendante pour chacun d'eux.

On appelle s1, s2,s3 et s4 les symboles complexes émis respectivement pendant l'intervalle de temps IT1, IT2, IT3 et IT4. Les symboles reçus pendant ces mêmes intervalles de temps sont nommés r1, r2, r3 et r4. Le bruit thermique introduit par l'antenne de réception est représenté par les échantillons n1, n2, n3 et n4.

### 1.2 Emission

Le codage de Jafarkhani consiste à émettre, pendant les 4 intervalles de temps IT1,IT2, IT3 et IT4, sur les différentes antennes d'émissions, les symboles présentés dans le tableau suivant :

|  | IT1 | IT2 | IT3 | IT4 |
|---|---|---|---|---|
| Antenne E1 | $s_1$ | $-s_2{}^*$ | $-s_3{}^*$ | $s_4$ |
| Antenne E2 | $s_2$ | $s_1{}^*$ | $-s_4{}^*$ | $-s_3$ |
| Antenne E3 | $s_3$ | $-s_4{}^*$ | $s_1{}^*$ | $-s_2$ |
| Antenne E4 | $s_4$ | $s_3{}^*$ | $s_2{}^*$ | $s_1$ |
| (.)* représente l'opérateur de conjugaison complexe. | | | | |

### 1.3 Réception

En réception conformément à la figure 1, on obtient sur l'antenne R1 les signaux suivant :

pendant IT1 : $r_1 = h_1 s_1 + h_2 s_2 + h_3 s_3 + h_4 s_4 + n_1$

pendant IT2 : $r_2 = -h_1 s_2^* + h_2 s_1^* - h_3 s_4^* + h_4 s_3^* + n_2$

pendant IT3 : $r_3 = -h_1 s_3^* - h_2 s_4^* + h_3 s_1^* + h_4 s_2^* + n_3$

pendant IT4 : $r_4 = h_1 s_4 - h_2 s_3 - h_3 s_2 + h_4 s_1 + n_4$

Une représentation matricielle équivalente s'écrit :

$$\tilde{r} = Hs + n$$

avec

$$\tilde{r} = \begin{bmatrix} r_1 \\ -r_2^* \\ -r_3^* \\ r_4 \end{bmatrix}, H = \begin{bmatrix} h_1 & h_2 & h_3 & h_4 \\ -h_2^* & h_1^* & -h_4^* & h_3^* \\ -h_3^* & -h_4^* & h_1^* & h_2^* \\ h_4 & -h_3 & -h_2 & h_1 \end{bmatrix}, s = \begin{bmatrix} s_1 \\ s_2 \\ s_3 \\ s_4 \end{bmatrix} \text{ et } n = \begin{bmatrix} n_1 \\ n_2 \\ n_3 \\ n_4 \end{bmatrix}$$

Le rendement global du codage est égal à 1.

On suppose, lors de la réception, la connaissance exacte des états des canaux $h_1$, $h_2$, $h_3$ et $h_4$. Le décodage s'effectue alors de la façon suivante :

pendant IT1 : $x_1 = h_1^* r_1 + h_2 r_2^* + h_3 r_3^* + h_4^* r_4$

pendant IT2 : $x_2 = h_2^* r_1 - h_1 r_2^* + h_4 r_3^* - h_3^* r_4$

pendant IT3 : $x_3 = h_3^* r_1 + h_4 r_2^* - h_1 r_3^* - h_2^* r_4$

pendant IT4 : $x_4 = h_4^* r_1 - h_3 r_2^* - h_2 r_3^* + h_1^* r_4$

Selon la représentation matricielle, le décodage s'effectue par l'application de la matrice $H^H$, où l'opérateur H signifie transposée conjuguée.

$$x = H^H \tilde{r} = H^H Hs + n'$$

avec

$$n' = \begin{bmatrix} h_1^* n_1 + h_2 n_2^* + h_3 n_3^* + h_4^* n_4 \\ h_2^* n_1 - h_1 n_2^* + h_4 n_3^* - h_3^* n_4 \\ h_3^* n_1 + h_4 n_2^* - h_1 n_3^* - h_2^* n_4 \\ h_4^* n_1 - h_3 n_2^* - h_2 n_3^* + h_1^* n_4 \end{bmatrix} \text{ et } x = \begin{bmatrix} x_1 \\ x_2 \\ x_3 \\ x_4 \end{bmatrix}$$

En effectuant le produit matriciel on obtient :

$$x = \begin{bmatrix} A & 0 & 0 & J \\ 0 & A & -J & 0 \\ 0 & -J & A & 0 \\ J & 0 & 0 & A \end{bmatrix} s + n'$$

avec

$$A = |h_1|^2 + |h_2|^2 + |h_3|^2 + |h_4|^2 \text{ et } J = 2\text{Re}\{h_1 h_4^* - h_2 h_3^*\}$$

On pose $G = \begin{bmatrix} A & 0 & 0 & J \\ 0 & A & -J & 0 \\ 0 & -J & A & 0 \\ J & 0 & 0 & A \end{bmatrix}$ que l'on appelle la matrice globale de codage/canal/décodage.

Les termes de la diagonale, A, suivent une loi de $\chi_2^8$. La diversité est donc maximale. Cependant les termes interférents J rendent sous-optimales les performances d'une détection linéaire directe. L'auteur propose donc une détection suivant le maximum de vraisemblance (ML : « Maximum Likelihood » en anglais). Cette détection est lourde et complexe à mettre en oeuvre.

Le codage de Jafarkhani présenté précédemment permet donc d'exploiter la diversité fournie par les 4 antennes d'émission. Cependant, à la différence du codage d'Alamouti à deux antennes 8, il subsiste, dans la matrice globale, des termes interférents J. Ces termes rendent le codage sous-optimal et nécessitent, en réception, l'utilisation d'un algorithme de détection ML complexe à mettre en oeuvre.

### 2. Approche itérative : exemple à 4 antennes

Un des aspects de la présente invention est d'annuler de façon itérative ces termes interférents grâce à la connaissance a priori du signal émis. Pour ce faire, deux modules sont utilisés, comme illustré en figure 2 :

- A l'initialisation (itération 1), le premier module 21 (dit de diagonalisation) permet d'estimer une première fois le symbole émis.
- A partir de la deuxième itération $22_2$ et ce jusqu'à la dernière $22_p$ : un second module (dit d'annulation d'interférences) a pour but de retrancher au signal reçu les termes interférents reconstruits grâce à la connaissance a priori du signal émis fourni par l'itération précédente.

Le décodage espace-temps 23 utilisé est celui présenté précédemment.

Lors de l'égalisation MMSE 24, le signal est multiplié par le facteur

$$\gamma = \frac{1}{|h_1|^2 + |h_2|^2 + |h_3|^2 + |h_4|^2 + \dfrac{1}{SNR}}$$

où SNR est le rapport signal à bruit. La matrice G est donc multiplié par $\gamma$.

#### 2.1 1ère itération : diagonalisation de la matrice G4

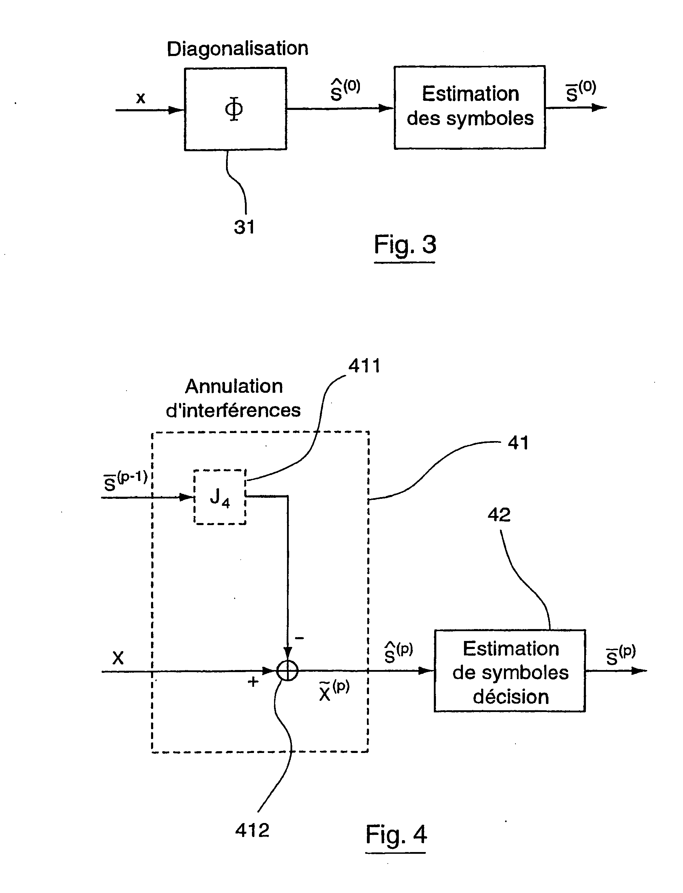

La première itération 21, illustrée en figure 3, est différente des itérations suivantes. Elle consiste à multiplier le signal par une matrice telle qu'on ait globalement une matrice diagonale. Pour cela, on diagonalise (31) tout d'abord la matrice *G*. Cette opération s'effectue simplement par la multiplication matricielle de *G* par une matrice de diagonalisation Φ qui est, à un facteur près, la co-matrice de G.

$$G = \gamma \begin{bmatrix} A & 0 & 0 & J \\ 0 & A & -J & 0 \\ 0 & -J & A & 0 \\ J & 0 & 0 & A \end{bmatrix}$$

avec

$$\Phi = \begin{bmatrix} A & 0 & 0 & -J \\ 0 & A & J & 0 \\ 0 & J & A & 0 \\ -J & 0 & 0 & A \end{bmatrix}$$

on obtient

$$G_{diag} = \Phi \cdot G = \gamma \begin{bmatrix} A^2 - J^2 & 0 & 0 & 0 \\ 0 & A^2 - J^2 & 0 & 0 \\ 0 & 0 & A^2 - J^2 & 0 \\ 0 & 0 & 0 & A^2 - J^2 \end{bmatrix}.$$

On remarque que l'opération de diagonalisation de la matrice $G$ revient à une combinaison linéaire des échantillons $x_i$, donc très simple à mettre en oeuvre.

On obtient ainsi :

$$x_{diag} = \Phi \cdot x = \gamma \begin{bmatrix} A^2 - J^2 & 0 & 0 & 0 \\ 0 & A^2 - J^2 & 0 & 0 \\ 0 & 0 & A^2 - J^2 & 0 \\ 0 & 0 & 0 & A^2 - J^2 \end{bmatrix} s + n''$$

avec $n'' = \Phi n'$

La matrice $G_{diag}$ étant diagonale, une détection linéaire 32 est possible. Cependant les termes de la diagonale ne suivent plus une loi de $\chi_2^8$, la diversité n'est donc pas exploitée de façon optimale.

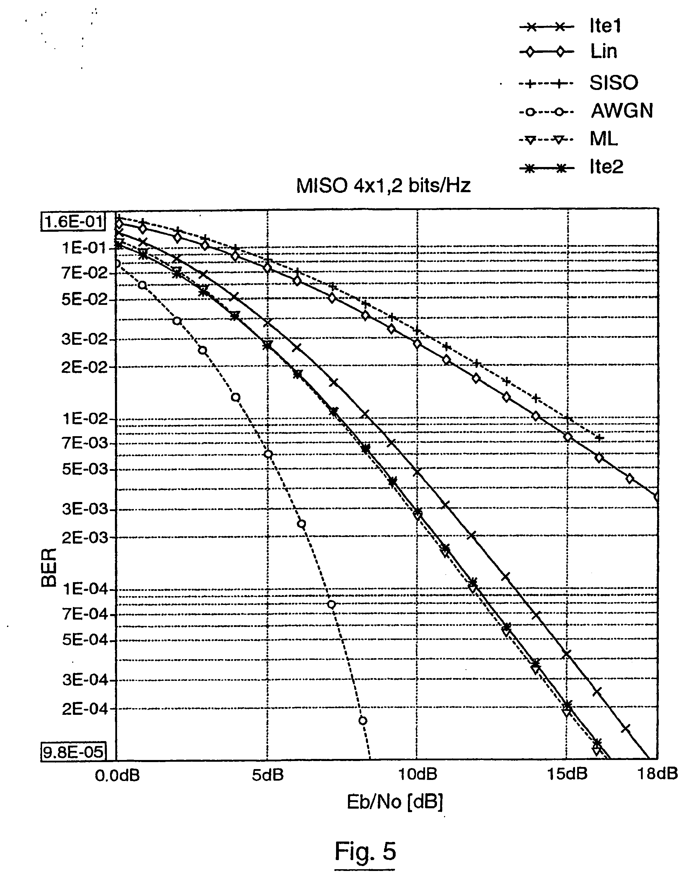

On obtient néanmoins une estimée du vecteur de symboles qu'on va appeler $\hat{s}^{(0)} = \begin{bmatrix} \hat{s}_1^{(0)} \\ \hat{s}_2^{(0)} \\ \hat{s}_3^{(0)} \\ \hat{s}_4^{(0)} \end{bmatrix}$. On remarquera,

sur les courbes de performances de la figure 5, que cette estimée est meilleure qu'une estimée faite sans diagonalisation.

Les symboles sont transformés en paquets de bits (par exemple opération de démodulation avec décision dure : on cherche le point de la constellation le plus proche du symbole considéré), et on obtient $\overline{b}^{(0)} = \begin{bmatrix} \overline{b}_1^{(0)} \\ \overline{b}_2^{(0)} \\ \overline{b}_3^{(0)} \\ \overline{b}_4^{(0)} \end{bmatrix}$

où $\overline{b}_l^{(0)}$ représente un vecteur de bits de longueur $2^M$.

On effectue enfin une opération de modulation sur $\overline{b}^{(o)}$ pour obtenir $\overline{s}^{(0)}$, vecteurs de symboles "décidés". Ces symboles seront utilisés à l'itération suivante.

2.2 Itération p (p>1) : annulation d'interférence

On dispose alors des données décidées à l'itération précédente $\bar{s}^{(p-1)}$. Une itération est illustrée en figure 4.

On construit une matrice d'interférence $J_4$ 411 :

$$J_4 = \gamma \begin{bmatrix} 0 & 0 & 0 & J \\ 0 & 0 & -J & 0 \\ 0 & -J & 0 & 0 \\ J & 0 & 0 & 0 \end{bmatrix}$$

L'annulation d'interférence 41 s'effectue par soustraction 412 du résultat de la multiplication 411 par $J_4$ à la sortie de l'égaliseur 24, comme suit :

$$\tilde{x}^{(p)} = x - J_4 \bar{s}^{(p-1)}$$

$$\tilde{x}^{(p)} = \gamma \begin{bmatrix} A & 0 & 0 & J \\ 0 & A & -J & 0 \\ 0 & -J & A & 0 \\ J & 0 & 0 & A \end{bmatrix} s + n' - \gamma \begin{bmatrix} 0 & 0 & 0 & -J \\ 0 & 0 & -J & 0 \\ 0 & -J & 0 & 0 \\ J & 0 & 0 & 0 \end{bmatrix} \bar{s}^{(p-1)}$$

Si $\bar{s}^{(p-1)}$ constitue une bonne approximation de s, on remarque que les termes interférents sont pratiquement annulés dans la matrice G.

La matrice devient ainsi diagonale est une estimation de symbole 42 par détection linéaire est possible. En effectuant les mêmes opérations d'égalisation, de démodulation et de détection que pour l'itération 1, on obtient une nouvelle estimation de s : $\bar{s}^{(p)}$.

2.3 résultats

La figure 5 présente les performances du système décrit ci-dessus pour une modulation à 4 états (QPSK), sans codage (Efficacité spectrale = 2bits/Hz). Les canaux de Rayleigh sont considérés blanc (non filtrés).

La courbe intitulée SISO représente les performances d'un système à une antenne d'émission et une antenne de réception. Ce système ne bénéfice d'aucune diversité spatiale, il s'agit donc d'une borne minimale.

La courbe Lin donne les performances du système de Jafarkhani détecté linéairement (matrice G), tandis que la courbe ML représente le taux d'erreur binaire du même système détecté par l'algorithme ML.

Les courbes nommées ite1 et ite2 représentent les performances des deux premières itérations de notre système. (le système converge dès l'itération 2).

On remarque que ite2 est confondu avec le ML de Jafarkhani. Pour une complexité moindre, on a donc déjà réussi à obtenir les mêmes performances qu'un algorithme à maximum de vraisemblance.

On notera par ailleurs, qu'il est possible d'améliorer le système en ajoutant du codage i.e. remplacer la modulation simple par une modulation codée (codeur convolutif, entrelaceur et modulation). En réception, il suffit de remplacer le démodulateur à décision dure par un démodulateur à décision souple suivit d'un entrelaceur et d'un décodeur de canal. En gardant l'information souple, on reconstruit le symbole émis en appliquant à nouveau l'étage de modulation codée.

### 3. Schéma à 8 antennes d'émission avec rendement 3/4

Le code utilisé a été introduit par H. Jafarkhani dans 7. On considère 8 antennes d'émission : E1, E2, E3, E4, E5, E6, E7, E8 et une antenne de réception R1. Il en résulte 8 canaux de propagation (toujours sans interférence entre symbole) : h1, h2, h3, h4, h5, h6, h7, h8.

On appelle s1, s2, s3, s4, s5 et s6, les symboles complexes à émettre et on dispose de 8 intervalles de temps d'émission IT1, IT2, IT3, IT4, IT5, IT6, TT7 et IT8 pendant lesquels les contributions hi sont supposées constantes.

3.1 Emission

Le schéma d'émission est le suivant :

|  | IT1 | IT2 | IT3 | IT4 | IT5 | IT6 | IT7 | IT8 |
|---|---|---|---|---|---|---|---|---|
| Antenne E1 | $s_1$ | $-s_2^*$ | $s_3^*$ | 0 | $-s_4$ | $-s_5^*$ | $s_6^*$ | 0 |
| Antenne E2 | $s_2$ | $s_1^*$ | 0 | $-s_3^*$ | $-s_5$ | $s_4^*$ | 0 | $s_6^*$ |
| Antenne E3 | $s_3$ | 0 | $-s_1^*$ | $s_2^*$ | $-s_6$ | 0 | $-s_4^*$ | $-s_5^*$ |
| Antenne E4 | 0 | $-s_3$ | $-s_2$ | $-s_1$ | 0 | $s_6$ | $s_5$ | $-s_4$ |
| Antenne E5 | $s_4$ | $s_5^*$ | $-s_6^*$ | 0 | $s_1$ | $-s_2^*$ | $s_3^*$ | 0 |
| Antenne E6 | $s_5$ | $-s_4^*$ | 0 | $s_6^*$ | $s_2$ | $s_1^*$ | 0 | $s_3^*$ |
| Antenne E7 | $s_6$ | 0 | $s_4^*$ | $-s_5^*$ | $s_3$ | 0 | $-s_1^*$ | $-s_2^*$ |
| Antenne E8 | 0 | $s_6$ | $s_5$ | $s_4$ | 0 | $s_3$ | $s_2$ | $-s_1$ |
| (.)* représente l'opérateur de conjugaison complexe. | | | | | | | | |

On note que le rendement de ce code est de 3/4.

On reçoit pendant les 8 intervalles de temps, les échantillons : $r_n = \sum_{i=1}^{8} S_{i,n}^{T} \cdot h_i + n_n$ avec 1<i<8, 1<n<8 et S la matrice de mapping correspondant au schéma d'émission ci-dessus.

En négligeant le bruit, une représentation matricielle équivalente s'écrit :

$$\tilde{r} = Hs$$

avec

$$H = \begin{bmatrix} h_1 & h_2 & h_3 & h_5 & h_6 & h_7 \\ 0 & 0 & -h_4 & 0 & 0 & h_8 \\ h_2^* & -h_1^* & 0 & -h_6^* & h_5^* & 0 \\ 0 & -h_4 & 0 & 0 & h_8 & 0 \\ -h_3^* & 0 & h_1^* & h_7^* & 0 & -h_5^* \\ -h_4 & 0 & 0 & h_8 & 0 & 0 \\ 0 & h_3^* & -h_2^* & 0 & -h_7^* & h_6^* \\ h_5 & h_6 & h_7 & -h_1 & -h_2 & -h_3 \\ 0 & 0 & h_8 & 0 & 0 & h_4 \\ h_6^* & -h_5^* & 0 & h_2^* & -h_1^* & 0 \\ 0 & h_8 & 0 & 0 & h_4 & 0 \\ -h_7^* & 0 & h_5^* & -h_3^* & 0 & h_1^* \\ -h_8 & 0 & 0 & -h_4 & 0 & 0 \\ 0 & -h_7^* & h_6^* & 0 & -h_3^* & h_2^* \end{bmatrix}, \quad s = \begin{bmatrix} s_1 \\ s_2 \\ s_3 \\ s_4 \\ s_5 \\ s_6 \end{bmatrix} \quad et \quad \tilde{r} = \begin{bmatrix} r_1 \\ r_2 \\ r_2^* \\ r_3 \\ r_3^* \\ r_4 \\ r_4^* \\ r_5 \\ r_6 \\ r_6^* \\ r_7 \\ r_7^* \\ r_8 \\ r_8^* \end{bmatrix}$$

3.2 Réception

Au décodage on applique la matrice $H^H$ suivit d'un coefficient d'égalisation MMSE $\gamma$ :

$$x = \gamma \cdot H^H \cdot \tilde{r} = \gamma \cdot H^H H \cdot s$$

et on obtient la matrice globale :

$$G = \gamma \cdot H^H \cdot H = \gamma \begin{bmatrix} A & 0 & 0 & -J & 0 & 0 \\ 0 & A & 0 & 0 & -J & 0 \\ 0 & 0 & A & 0 & 0 & -J \\ J & 0 & 0 & A & 0 & 0 \\ 0 & J & 0 & 0 & A & 0 \\ 0 & 0 & J & 0 & 0 & A \end{bmatrix}$$

avec

$$A = |h_1|^2 + |h_2|^2 + |h_3|^2 + |h_4|^2 + |h_5|^2 + |h_6|^2 + |h_7|^2 + |h_8|^2$$

$$J = 2\mathrm{Im}\{h_1 h_5^* + h_2 h_6^* + h_3 h_7^* + h_4 h_8^*\}$$

et

$$\gamma = \frac{1}{|h_1|^2 + |h_2|^2 + |h_3|^2 + |h_4|^2 + |h_5|^2 + |h_6|^2 + |h_7|^2 + |h_8|^2 + \dfrac{1}{SNR}}$$

On note que A suit une loi de $\chi_2^8$ (diversité 8).

Tout comme à 4 antennes, le décodage se décompose en deux étapes :

*3.2.1 Diagonalisation*

L'opération de diagonalisation s'effectue en appliquant la matrice Φ:

$$\Phi = \begin{bmatrix} A & 0 & 0 & J & 0 & 0 \\ 0 & A & 0 & 0 & J & 0 \\ 0 & 0 & A & 0 & 0 & J \\ -J & 0 & 0 & A & 0 & 0 \\ 0 & -J & 0 & 0 & A & 0 \\ 0 & 0 & -J & 0 & 0 & A \end{bmatrix}$$

On obtient:

$$G_{diag} = \Phi \cdot G = \gamma \begin{bmatrix} A^2 + J^2 & 0 & 0 & 0 & 0 & 0 \\ 0 & A^2 + J^2 & 0 & 0 & 0 & 0 \\ 0 & 0 & A^2 + J^2 & 0 & 0 & 0 \\ 0 & 0 & 0 & A^2 + J^2 & 0 & 0 \\ 0 & 0 & 0 & 0 & A^2 + J^2 & 0 \\ 0 & 0 & 0 & 0 & 0 & A^2 + J^2 \end{bmatrix}$$

Une détection linéaire est donc possible : on obtient $\hat{s}^{(0)}$, puis après décision $\bar{s}^{(0)}$.

*3.2.2 Annulation d'interférences*

On reconstruit les interférences en multipliant le vecteur $\bar{s}^{(p-1)}$ des données estimées à l'étape précédente par la matrice $J_6$ :

$$J_6 = \gamma \begin{bmatrix} 0 & 0 & 0 & -J & 0 & 0 \\ 0 & 0 & 0 & 0 & -J & 0 \\ 0 & 0 & 0 & 0 & 0 & -J \\ J & 0 & 0 & 0 & 0 & 0 \\ 0 & J & 0 & 0 & 0 & 0 \\ 0 & 0 & J & 0 & 0 & 0 \end{bmatrix}$$

Par soustraction de ces interférences au signal décodé x, on en déduit $\bar{s}^{(p)}$.

3.3 Résultats

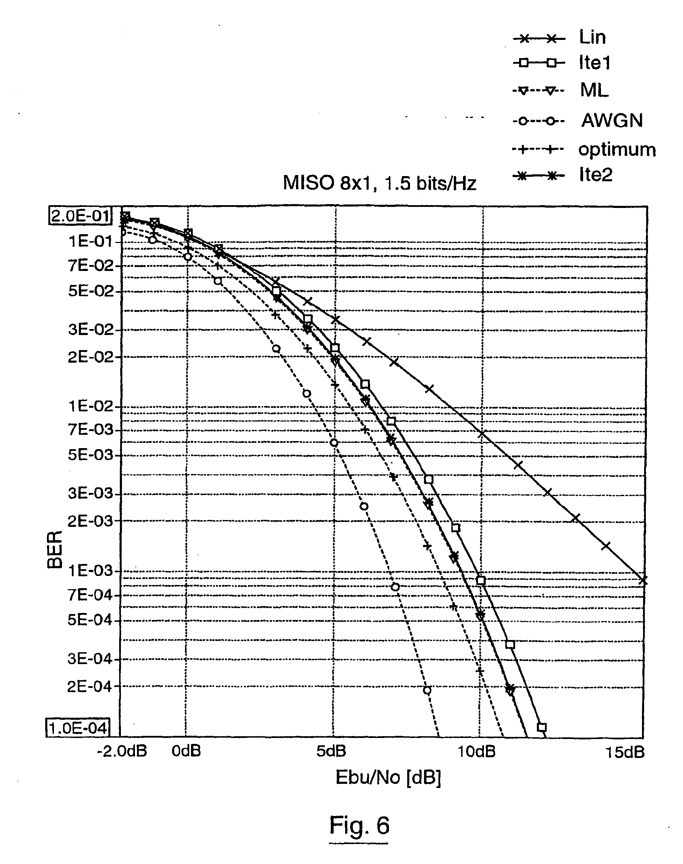

La figure 6 présente les performances du système proposé avec le code de rendement 3/4 pour une modulation à 4 états (QPSK), sans codage de canal (Efficacité spectrale = 1.5 bits/Hz). Les canaux de Rayleigh sont considérés blancs (non filtrés) et constants sur 16 temps symboles.

La courbe Lin donne les performances du code détecté linéairement (décodage brut), la courbe ML représente le taux d'erreur binaire du même système détecté par l'algorithme ML. Ite1 et Ite2 représentent les performances des 2 premières itérations du système proposé tandis la courbe optimum donne la borne optimale du système consistant en une annulation parfaite des interférences (filtre adapté).

On retrouve un résultat comparable au système à 4 antennes, ite 2 est confondu avec la courbe ML. Cependant les 8 antennes d'émissions donnent une diversité 8 au système, ainsi les performances sont meilleures qu'à 4 antennes.

## 4. Schéma à 8 antennes d'émission avec rendement 1/2

Le code présenté ci-après n'existe pas dans la littérature, il a été crée à partir du code G4 de Tarokh 8 en suivant un schéma ABBA de Tirkkonen 6. On considère toujours 8 antennes d'émission : E1, E2, E3, E4, E5, E6, E7,E8 et une antenne de réception R1 ainsi que les 8 canaux de propagation : h1, h2, h3, h4, h5, h6, h7, h8.

On appelle s1, s2, s3, s4, s5,s6, s7 et s8, les symboles complexes à émettre. On dispose de 16 intervalles de temps d'émission IT1, IT2, IT3, IT4, IT5, IT6, IT7 et IT8, pendant lesquels les contributions hi sont supposées constantes.

4.1 Emission

Le schéma d'émission est le suivant :

| | IT1 | IT2 | IT3 | IT4 | IT5 | IT6 | IT7 | IT8 | IT9 | IT10 | IT11 | IT12 | IT13 | IT14 | IT15 | IT16 |
|---|---|---|---|---|---|---|---|---|---|---|---|---|---|---|---|---|
| Antenne E1 | $s_1$ | $-s_2$ | $-s_3$ | $-s_4$ | $s_1^*$ | $-s_2^*$ | $-s_3^*$ | $-s_4^*$ | $s_5$ | $-s_6$ | $-s_7$ | $-s_8$ | $s_5^*$ | $-s_6^*$ | $-s_7^*$ | $-s_8^*$ |
| Antenne E2 | $s_2$ | $s_1$ | $s_4$ | $-s_3$ | $s_2^*$ | $s_1^*$ | $s_4^*$ | $-s_3^*$ | $s_6$ | $s_5$ | $s_8$ | $-s_7$ | $s_6^*$ | $s_5^*$ | $s_8^*$ | $-s_7^*$ |
| Antenne E3 | $s_3$ | $-s_4$ | $s_1$ | $s_2$ | $s_3^*$ | $-s_4^*$ | $s_1^*$ | $s_2^*$ | $s_7$ | $-s_8$ | $s_5$ | $s_6$ | $s_7^*$ | $-s_8^*$ | $s_5^*$ | $s_6^*$ |
| Antenne E4 | $s_4$ | $s_3$ | $-s_2$ | $s_1$ | $s_4^*$ | $s_3^*$ | $-s_2^*$ | $s_1^*$ | $s_8$ | $s_7$ | $-s_6$ | $s_5$ | $s_8^*$ | $s_7$ | $-s_6^*$ | $s_5^*$ |
| Antenne E5 | $s_5$ | $-s_6$ | $-s_7$ | $-s_8$ | $s_5^*$ | $-s_6^*$ | $-s_7^*$ | $-s_8^*$ | $s_1$ | $-s_2$ | $-s_3$ | $-s_4$ | $s_1^*$ | $-s_2^*$ | $-s_3^*$ | $-s_4^*$ |
| Antenne E6 | $s_6$ | $s_5$ | $s_8$ | $-s_7$ | $s_6^*$ | $s_5^*$ | $s_8^*$ | $-s_7^*$ | $s_2$ | $s_1$ | $s_4$ | $-s_3$ | $s_2^*$ | $s_1^*$ | $s_4^*$ | $-s_3^*$ |
| Antenne E7 | $s_7$ | $-s_8$ | $s_5$ | $s_6$ | $s_7^*$ | $-s_8^*$ | $s_5^*$ | $s_6^*$ | $s_3$ | $-s_4$ | $s_1$ | $s_2$ | $s_3$ | $-s_4^*$ | $s_1^*$ | $s_2$ |
| Antenne E8 | $s_8$ | $s_7$ | $-s_6$ | $s_5$ | $s_8^*$ | $s_7^*$ | $-s_6^*$ | $s_5^*$ | $s_4$ | $s_3$ | $-s_2$ | $s_1$ | $s_4^*$ | $s_3^*$ | $-s_2^*$ | $s_1^*$ |

$(.)^*$ représente l'opérateur de conjugaison complexe.

On note que le rendement de ce code est de 1/2.

On reçoit pendant les 16 intervalles de temps, les échantillons : $r_n = \sum_{i=1}^{8} S_{i,n} \cdot h_i + n_n$ avec 1<i<8, 1<n<16 et S la matrice de mapping correspondant au schéma d'émission ci-dessus.

En négligeant le bruit, une représentation matricielle équivalente s'écrit :

$$\tilde{r} = Hs$$

avec

$$
H = \begin{bmatrix}
h_1 & h_2 & h_3 & h_4 & h_5 & h_6 & h_7 & h_8 \\
h_2 & -h_1 & h_4 & -h_3 & h_6 & -h_5 & h_8 & -h_7 \\
h_3 & -h_4 & -h_1 & h_2 & h_7 & -h_8 & -h_5 & h_6 \\
h_4 & h_3 & -h_2 & -h_1 & h_8 & h_7 & -h_6 & -h_5 \\
h_1^* & h_2^* & h_3^* & h_4^* & h_5^* & h_6^* & h_7^* & h_8^* \\
h_2^* & -h_1^* & h_4^* & -h_3^* & h_6^* & -h_5^* & h_8^* & -h_7^* \\
h_3^* & -h_4^* & -h_1^* & h_2^* & h_7^* & -h_8^* & -h_5^* & h_6^* \\
h_4^* & h_3^* & -h_2^* & -h_1^* & h_8^* & h_7^* & -h_6^* & -h_5^* \\
h_5 & h_6 & h_7 & h_8 & h_1 & h_2 & h_3 & h_4 \\
h_6 & -h_5 & h_8 & -h_7 & h_2 & -h_1 & h_4 & -h_3 \\
h_7 & -h_8 & -h_5 & h_6 & h_3 & -h_4 & -h_1 & h_2 \\
h_8 & h_7 & -h_6 & -h_5 & h_4 & h_3 & -h_2 & -h_1 \\
h_5^* & h_6^* & h_7^* & h_8^* & h_1^* & h_2^* & h_3^* & h_4^* \\
h_6^* & -h_5^* & h_8^* & -h_7^* & h_2^* & -h_1^* & h_4^* & -h_3^* \\
h_7^* & -h_8^* & -h_5^* & h_6^* & h_3^* & -h_4^* & -h_1^* & h_2^* \\
h_8^* & h_7^* & -h_6^* & -h_5^* & h_4^* & h_3^* & -h_2^* & -h_1^*
\end{bmatrix},\quad
s = \begin{bmatrix} s_1 \\ s_2 \\ s_3 \\ s_4 \\ s_5 \\ s_6 \\ s_7 \\ s_8 \end{bmatrix}\quad et\quad
\tilde{r} = \begin{bmatrix} r_1 \\ r_2 \\ r_3 \\ r_4 \\ r_1^* \\ r_2^* \\ r_3^* \\ r_4^* \\ r_5 \\ r_6 \\ r_7 \\ r_8 \\ r_5^* \\ r_6^* \\ r_7^* \\ r_8^* \end{bmatrix}
$$

### 4.2 Réception

Au décodage, on applique la matrice $H^H$ suivie d'une égalisation MMSE de coefficient $\gamma$,
$x = \gamma \cdot H^H \cdot \tilde{r} = \gamma \cdot H^H H \cdot s$, la matrice globale G s'écrit :

$$G = \gamma \cdot H^H \cdot H = \gamma \begin{bmatrix} A & 0 & 0 & 0 & J & 0 & 0 & 0 \\ 0 & A & 0 & 0 & 0 & J & 0 & 0 \\ 0 & 0 & A & 0 & 0 & 0 & J & 0 \\ 0 & 0 & 0 & A & 0 & 0 & 0 & J \\ J & 0 & 0 & 0 & A & 0 & 0 & 0 \\ 0 & J & 0 & 0 & 0 & A & 0 & 0 \\ 0 & 0 & J & 0 & 0 & 0 & A & 0 \\ 0 & 0 & 0 & J & 0 & 0 & 0 & A \end{bmatrix}$$

avec

$$A = 2 \cdot \left( |h_1|^2 + |h_2|^2 + |h_3|^2 + |h_4|^2 + |h_5|^2 + |h_6|^2 + |h_7|^2 + |h_8|^2 \right)$$

$$J = 2\mathrm{Re}\left\{ h_1 h_5^* + h_2 h_6^* + h_3 h_7^* + h_4 h_8^* \right\} \text{ et}$$

$$\gamma = \frac{1}{2} \cdot \frac{1}{|h_1|^2 + |h_2|^2 + |h_3|^2 + |h_4|^2 + |h_5|^2 + |h_6|^2 + |h_7|^2 + |h_8|^2 + \dfrac{1}{SNR}}$$

On note que A suit une loi de $\chi_2^8$ (diversité 8).

Les 2 étapes de l'invention s'effectuent comme suit :

*4.2.1 Diagonalisation*

La matrice utilisée pour diagonaliser G est :

$$\Phi = \begin{bmatrix} A & 0 & 0 & 0 & -J & 0 & 0 & 0 \\ 0 & A & 0 & 0 & 0 & -J & 0 & 0 \\ 0 & 0 & A & 0 & 0 & 0 & -J & 0 \\ 0 & 0 & 0 & A & 0 & 0 & 0 & -J \\ -J & 0 & 0 & 0 & A & 0 & 0 & 0 \\ 0 & -J & 0 & 0 & 0 & A & 0 & 0 \\ 0 & 0 & -J & 0 & 0 & 0 & A & 0 \\ 0 & 0 & 0 & -J & 0 & 0 & 0 & A \end{bmatrix}$$

On obtient :

$$G_{diag} = \Phi \cdot G = \gamma \begin{bmatrix} A^2 - J^2 & 0 & 0 & 0 & 0 & 0 & 0 & 0 \\ 0 & A^2 - J^2 & 0 & 0 & 0 & 0 & 0 & 0 \\ 0 & 0 & A^2 - J^2 & 0 & 0 & 0 & 0 & 0 \\ 0 & 0 & 0 & A^2 - J^2 & 0 & 0 & 0 & 0 \\ 0 & 0 & 0 & 0 & A^2 - J^2 & 0 & 0 & 0 \\ 0 & 0 & 0 & 0 & 0 & A^2 - J^2 & 0 & 0 \\ 0 & 0 & 0 & 0 & 0 & 0 & A^2 - J^2 & 0 \\ 0 & 0 & 0 & 0 & 0 & 0 & 0 & A^2 - J^2 \end{bmatrix}$$

Une détection linéaire est donc possible, on obtient $\hat{s}^{(0)}$, puis après décision $\overline{s}^{(0)}$.

*4.2.2 Annulation d'interférences*

On reconstruit les interférences en multipliant le vecteur $\overline{s}^{(p-1)}$ des données estimées à l'étape précédente par la matrice $J_8$ :

$$J_8 = \gamma \begin{bmatrix} 0 & 0 & 0 & 0 & J & 0 & 0 & 0 \\ 0 & 0 & 0 & 0 & 0 & J & 0 & 0 \\ 0 & 0 & 0 & 0 & 0 & 0 & J & 0 \\ 0 & 0 & 0 & 0 & 0 & 0 & 0 & J \\ J & 0 & 0 & 0 & 0 & 0 & 0 & 0 \\ 0 & J & 0 & 0 & 0 & 0 & 0 & 0 \\ 0 & 0 & J & 0 & 0 & 0 & 0 & 0 \\ 0 & 0 & 0 & J & 0 & 0 & 0 & 0 \end{bmatrix}$$

Par soustraction de ces interférences au signal décodé x, on en déduit $\overline{s}^{(p)}$.

4.3 Résultats

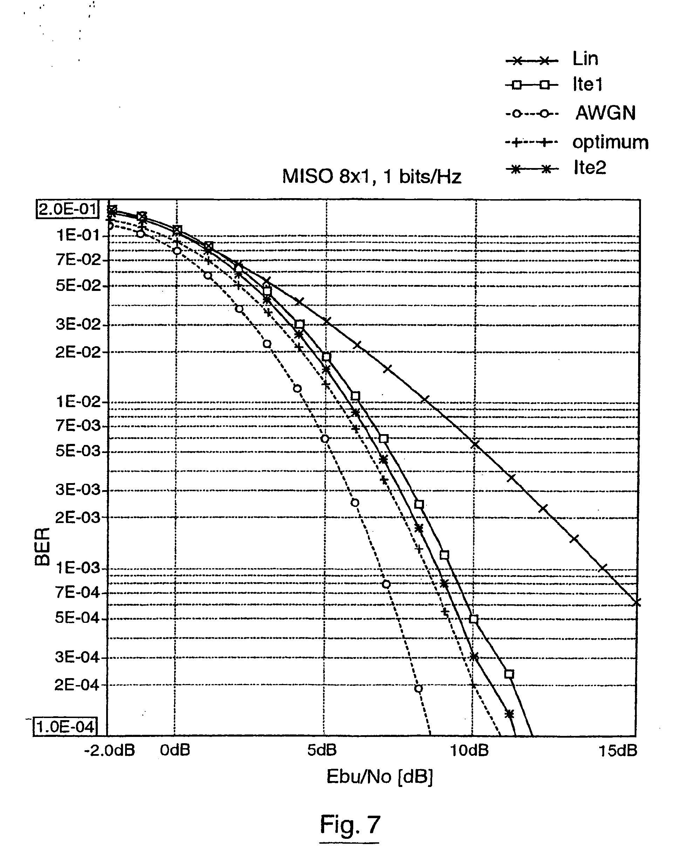

La figure 7 présente les performances du système proposé avec le code de rendement 1/2 pour une modulation à 4 états (QPSK), sans codage de canal (Efficacité spectrale = 1 bits/Hz). Les canaux de Rayleigh sont considérés blancs (non filtrés) et constants sur 16 temps symboles.

La courbe Lin donne les performances du code détecté linéairement (décodage brut). Ite1 et Ite2 représentent les performances des 2 premières itérations du système proposé tandis que la courbe optimum donne la borne optimale du système consistant en une annulation parfaite des interférences (filtre adapté).

La courbe ML, trop longue à simuler, n'est pas présentée dans les résultats (elle serait en toute évidence confondue avec la courbe ite2). On remarque qu'en comparaison avec le code à rendement 3/4, les performances de ite2 se rapprochent encore un peu plus de l'optimal.

## 5. Association avec une technique de précodage linéaire

Le précodage introduit par V. Le Nir dans [10] permet de gagner en diversité tout en restant à même efficacité spectrale et ce pour des codes espace-temps orthogonaux.

5.1 Schéma original

Dans ce document, on propose une approche destinée aux codes espace-temps orthogonaux, selon laquelle les symboles à émettre sont précodés avec une matrice de précodage linéaire particulière, avant d'être codés selon un codage espace-temps par blocs. Cette approche permet de simplifier le traitement à la réception.

5 2 Approche selon l'invention

Pour des codes espace-temps non orthogonaux, le schéma de précodage présenté dans ce document ne fonctionne plus, du fait des interférences crées par la non-orthogonalité des codes.

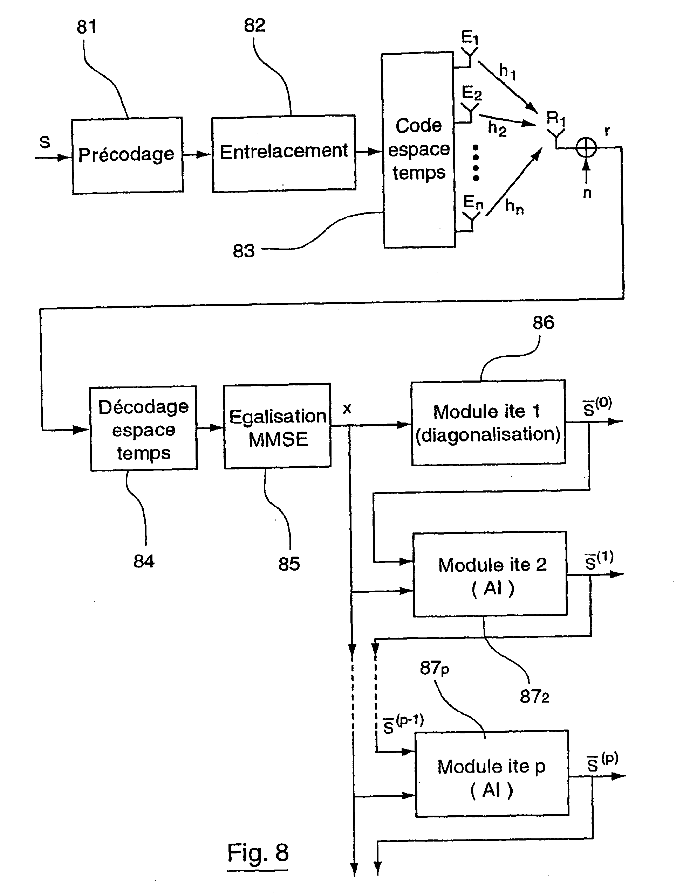

Pour de tels codes, l'invention permet un décodage simple en exploitant au mieux les diversités apportées par le code espaces-temps et également par le schéma de précodage. La figure 8 présente un système code espace-temps (non orthogonal) associé avec du précodage, ainsi que le récepteur correspondant.

On prévoit donc à l'émission un précodage 81, du type proposé dans 10, puis un entrelacement 82 et un codage espace-temps 83. Les signaux sont émis à l'aide de n antennes d'émission $E_i$, via n canaux de transmission $h_p$, vers une antenne de réception $R_1$ (plusieurs antennes de réception peuvent bien sûr être prévues).

A la réception, on effectue tout d'abord un décodage espace-temps 84, symétrique du codage effectué à l'émission, puis une égalisation 85, par exemple de type MMSE.

On retrouve ensuite les différentes itérations, selon l'approche décrite précédemment :

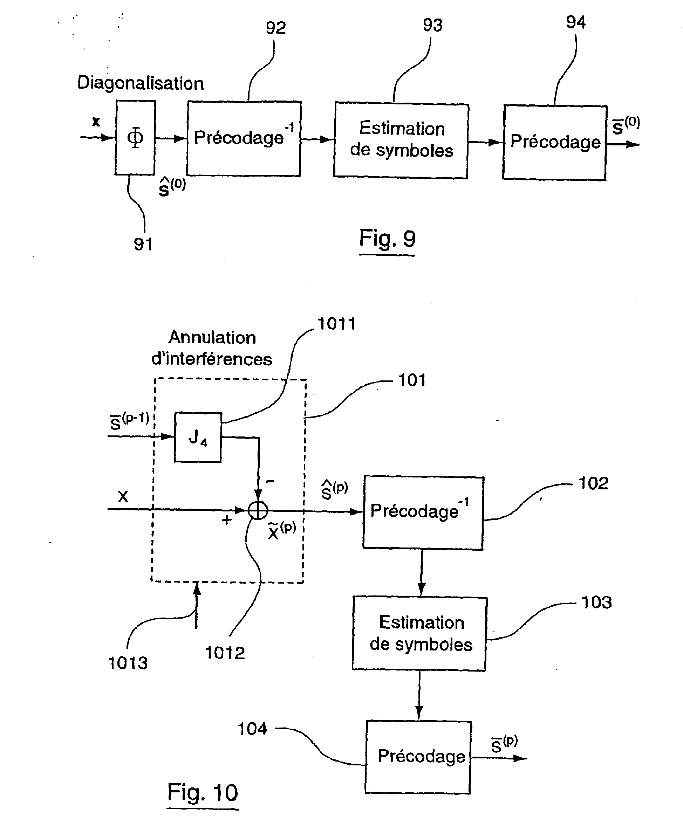

- itération 1 : diagonalisation 86, détaillée en figure 9 ;
- itérations suivantes : annulation d'interférences $87_2$ à $87_p$, détaillée en figure 10.

Comme illustré en figure 9, l'étape de diagonalisation comprend tout d'abord une diagonalisation 91 proprement dite, telle que décrite précédemment. Elle est suivie d'une opération de désentrelacement 92 symétrique de l'entrelacement effectué à l'émission, puis un prédécodage inverse 93, symétrique du précodage effectué à l'émission, puis d'une estimation des symboles 94. On effectue ensuite un nouveau précodage 95, identique à celui réalisé à l'émission, sur les symboles estimés et enfin un entrelacement 96 identique a celui de l'émission.

Le signal correspondant alimente la première itération d'annulation d'interférences, comme illustré en figure 10. Il est multiplié par une matrice d'interférence 1011, dont le résultat est soustrait (1012) du signal égalisé, pour effectuer l'annulation d'interférence 101. Dans le cas de la mise en oeuvre de décisions souples, une information de fiabilité 1013 peut être prise en compte.

Ensuite, dans chaque itération, on répète les opérations également effectuées lors de l'étape de diagonalisation : désentrelacement 102 symétrique de l'entrelacement effectué à l'émission , prédécodage inverse 103, symétrique du précodage effectué à l'émission, puis estimation des symboles 104. On effectue ensuite un nouveau précodage 105, identique à celui réalisé à l'émission, sur les symboles estimés et enfin un entrelacement 105 identique a celui effectué à l'émission. Le résultat $\overline{s}^{(p-1)}$ est ré-introduit dans l'itération suivante ou, pour la dernière itération, pris en compte pour la suite du traitement.

5.3 Résultats

On reprend les conditions de simulations du système à 4 antennes d'émissions. (code espace-temps de Jafarkhani, canal de Rayleigh blanc non filtré et constant sur 4 temps symboles, modulation QPSK, sans codage de canal, efficacité spectrale de 2 bits/Hz). Le précodage est choisi de longueur 64, l'entrelacement est de type IQ, uniforme et de longueur 10000 temps symboles.

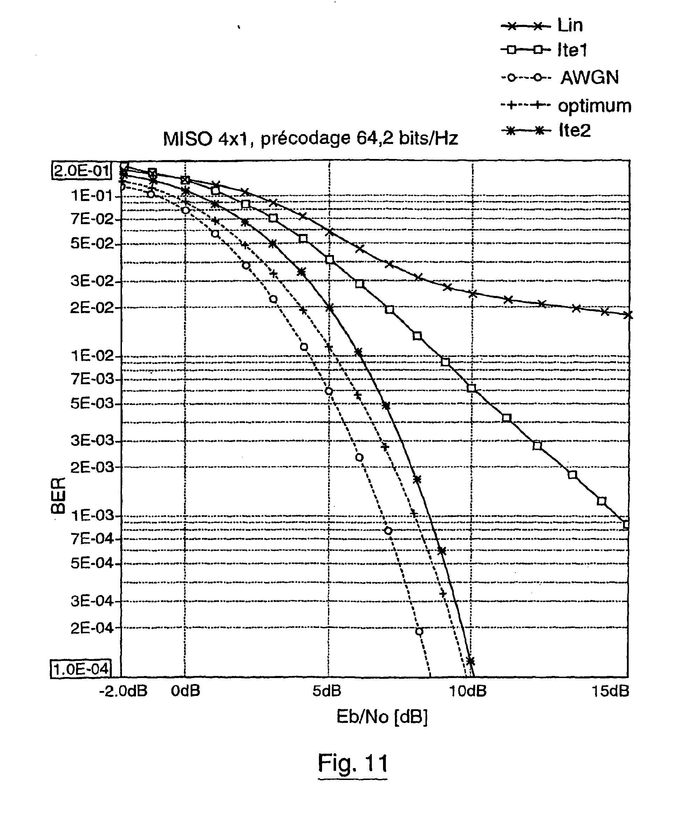

Les résultats sont illustrés sur la figure 11.

Lin représente les performances du système décodé linéairement (décodage brut) avec précodage 64. Ite 1 et Ite2 représente les performances des 2 premières itérations du système proposé. Enfin Optimum est la borne optimale du système avec précodage : annulation optimale des interférences et précodage.

La courbe Ite2 montre que l'approche de l'invention tire parti des 2 diversités : précodage et code espace-temps. La diversité résultante est de 64*4 = 256. Soit une diversité quasi-gaussienne et ce pour une efficacité spectrale de 2 bits/Hz. Pour gagner encore en diversité, on peut utiliser l'un des deux codes à 8 antennes présentés précédemment.

## 6. Utilisation d'un précodage par étalement de spectre

Une approche similaire peut être utilisée avec un précodage par étalement de spectre, en utilisant par exemple les techniques CDMA, MC-CDMA, WCDMA, DS-CDMA,...

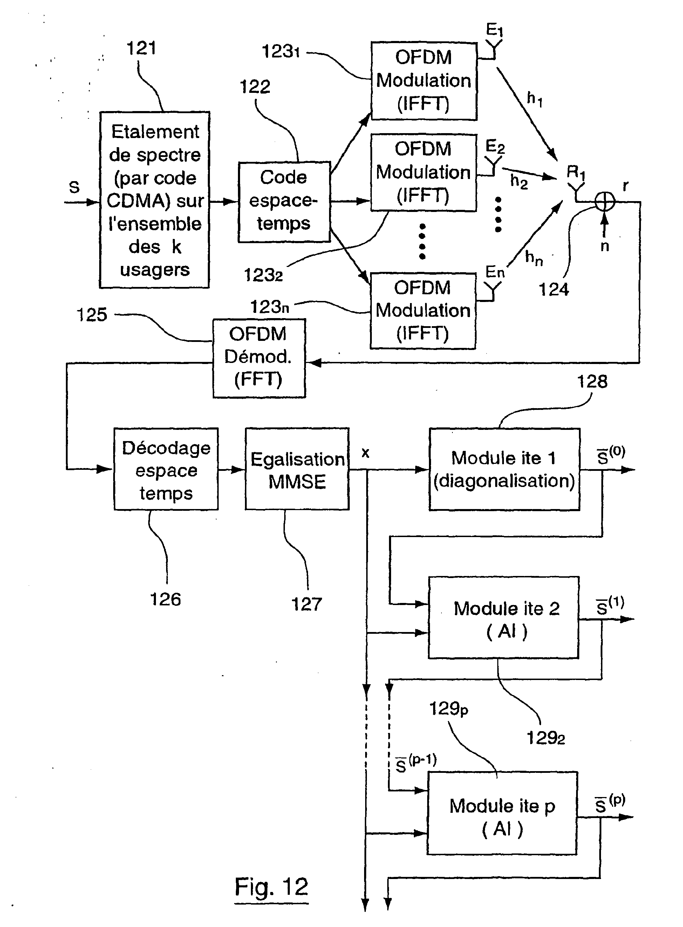

La figure 12 illustre le principe général de cette approche. On effectue à l'émission un étalement de spectre 121, par exemple par code CDMA, sur un ensemble de k usagers. On applique ensuite un code espace-temps 122.

A l'aide de n FFT inverse $123_1$ à $123_n$, on effectue n modulations OFDM, émises sur n antennes $E_1$ à $E_n$. L'antenne de réception $R_1$ reçoit le signal correspondant à la transmission via les n canaux $h_1$ à $h_n$, auquel s'ajoute (124) le bruit additif n.

On effectue tout d'abord, à la réception, une démodulation OFDM, à l'aide d'une FFT 125, puis, de la même façon que déjà décrit, un décodage espace-temps 126, et une égalisation 127. On retrouve ensuite les étapes de diagonalisation 128 et les p itérations d'annulation d'interférences $129_2$ à $129_p$.

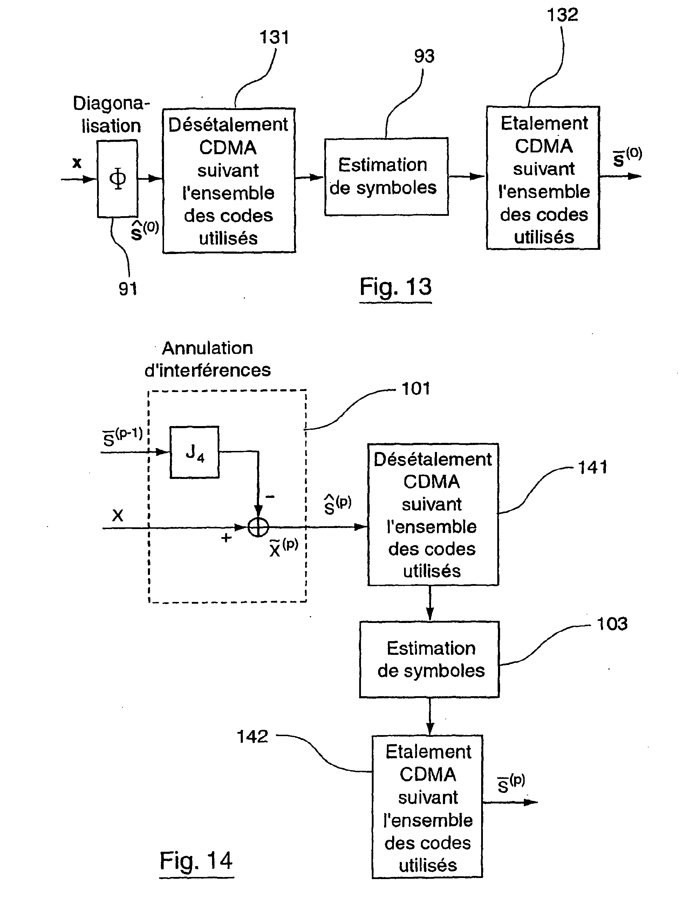

La diagonalisation, illustrée en figure 13, est similaire à celle décrite précédemment, l'opération de prédécodage consistant en un désétalement CDMA 131 suivant les codes usager, et l'opération de précodage en un étalement CDMA 132 suivant les codes usager.

On retrouve également ces opérations de désétalement 141 et d'étalement 142 dans chaque itération d'annulation d'interférences, comme illustré en figure 14.

Les autres opérations illustrées sur ces figures 13 et 14 ne sont pas rediscutées : elles sont identiques à celles décrites précédemment, en relation avec les figures 9 et 10.

On notera par ailleurs que, dans le cas d'un tel précodage par étalement de spectre, il est possible d'effectuer le même traitement d'une façon différente, en intégrant dans la matrice globale non seulement le codage, le canal et le décodage, mais également l'étalement et le désétalement.

Dans ce cas, la dimension de la matrice G utilisée pour la diagonalisation et l'annulation d'interférences est supérieure à celle du code espace-temps, mais le traitement global est simplifié. D'une façon générale, il est à noter que dans tous les cas, la taille de cette matrice peut être supérieure à celle du code espace-temps, contrairement à l'approche proposée par Boariu.

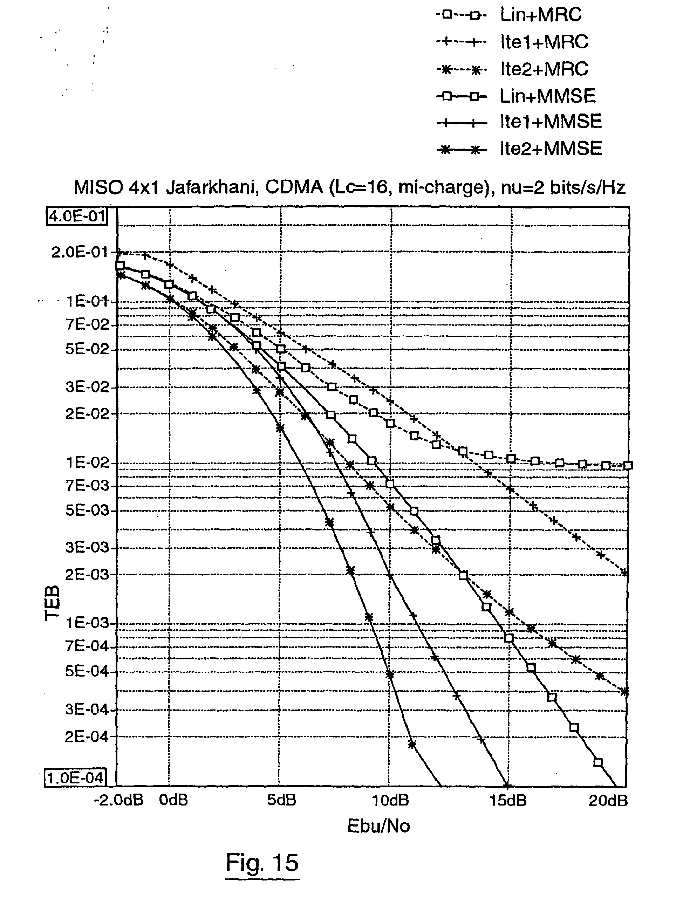

La figure 15 présente les résultats de cette approche pour un code de longueur 16, 8 utilisateurs et sur un nombre de porteuses égal à 1.

On compare la technique de filtrage MRC (Maximum Ration Combining) avec l'approche de l'invention mettant en oeuvre une égalisation (ici de type MMSE (Minimum Mean Square Error)). Cette seconde approche donne de bien meilleurs résultats.

## 7. Association avec codage de canal

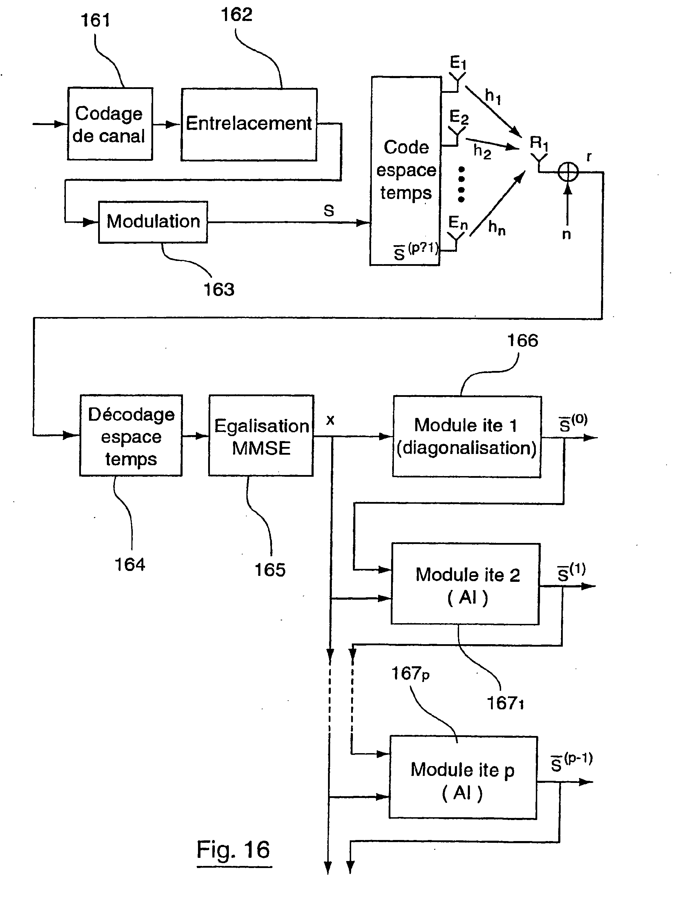

Selon un mode de réalisation de l'invention, illustré par la figure 16, on propose de coder les symboles au moyen d'un codage de canal. Ces symboles seront ensuite codés suivant un code espace-temps. Le codage de canal permet en effet d'augmenter les performances du système global en rajoutant de l'information redondante.

On prévoit donc à l'émission un codage de canal (opération connue en soi dans la littérature) 161 sur les bits à transmettre, suivi d'un entrelacement 162 et d'une opération de modulation 163. Les symboles obtenus sont ensuite codés au moyen d'un code espace-temps en bloc 168. Les signaux sont émis à l'aide de n antennes d'émission $E_i$, via n canaux de transmission $h_p$, vers une antenne de réception $R_1$ (plusieurs antennes de réception peuvent bien sûr être prévues).

A la réception, on effectue tout d'abord un décodage espace-temps 164, symétrique du codage effectué à l'émission, puis une égalisation 165, par exemple de type MMSE.

On met en oeuvre ensuite les itérations, selon l'approche décrite précédemment :

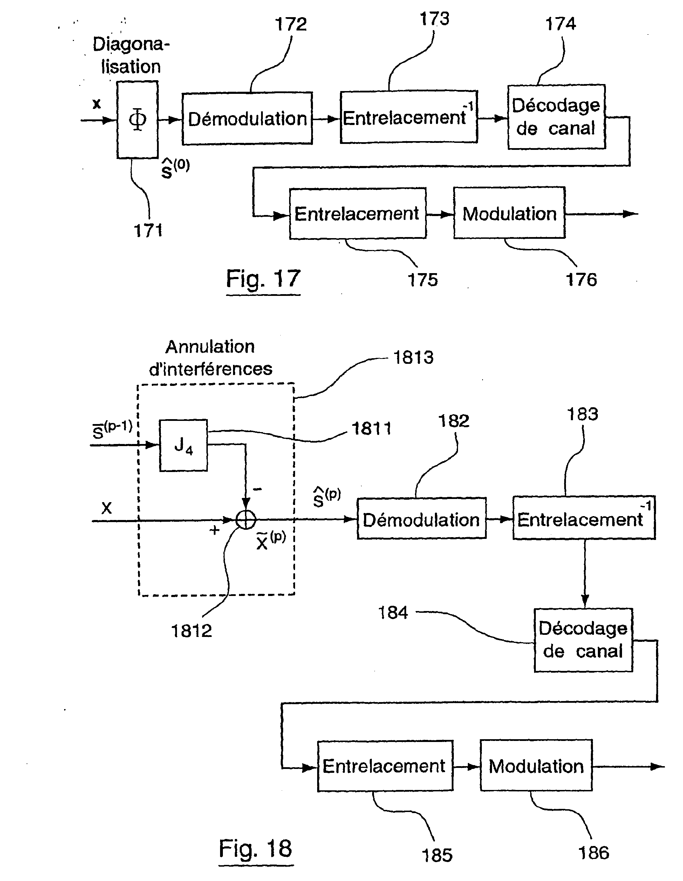

- itération 1 : diagonalisation 166, détaillée en figure 17 ;
- itérations suivantes : annulation d'interférences $167_2$ à $167_p$, détaillée en figure 18.

Comme illustré en figure 17, l'étape de diagonalisation comprend tout d'abord une diagonalisation 171 proprement dite, telle que décrite précédemment. elle est suivie d'une opération de démodulation 172, symétrique de la modulation effectuée à l'émission. Cette démodulation peut être douce au sens ou elle peut délivrer une information de confiance sur les bits démodulés.

Le terme modulation s'entend ici comme une conversion entre un ou plusieurs éléments binaires et un symbole complexe. La démodulation est l'opération inverse. Lorsqu'une modulation codée en treillis est mise en oeuvre, cette phase de modulation ou de démodulation est égale à l'identité.

Ensuite, on effectue un désentrelacement 173 symétrique à celui de l'émission, puis un décodage de canal 174 symétrique du codage de canal effectué à l'émission. Ce décodage produit en sortie une probabilité sur les bits codés. Le décodeur peut traiter des informations douces en entrée comme en sortie.

Ensuite, on effectue un entrelacement 175 identique à celui de l'émission, puis on effectue une modulation 176 identique encore à l'émission. Cette modulation peut accepter des données douces en entrée et peut produire en sortie des symboles tenant compte de la confiance des bits d'entrée, c'est-à-dire des symboles pondérés.

Selon un mode de réalisation particulier, la démodulation et le décodage de canal peuvent être réalisés conjointement.

Le signal correspondant alimente la première itération d'annulation d'interférences, comme illustré en figure 16. Il est multiplié par une matrice d'interférence 1811, dont le résultat est soustrait (1812) du signal égalisé, pour effectuer l'annulation d'interférence 181. Dans le cas de la mise en oeuvre de décisions souples, une information de fiabilité 1813 peut être prise en compte.

Ensuite, dans chaque itération, on répète les opérations également effectuées lors de l'étape de diagonalisation : démodulation 182, symétrique de la modulation effectuée à l'émission. Cette démodulation peut être douce au sens ou elle peut délivrer une information de confiance sur les bits démodulés.

Ensuite, on effectue un désentrelacement 183 symétrique à celui de l'émission, puis un décodage de canal 184 symétrique du codage de canal effectué à l'émission. Ce décodage produit en sortie une probabilité sur les bits codés. Le décodeur peut traiter des informations douces en entrée comme en sortie.

Ensuite, on effectue un entrelacement 185 identique à celui de l'émission, puis on effectue une modulation 186 identique encore à l'émission. Cette modulation peut accepter des données douces en entrée et peu produire en sortie des symboles tenant compte de la confiance des bits d'entrée, i.e. des symboles pondérés.. Le résultat $\overline{s}^{(p-1)}$ est réintroduit dans l'itération suivante ou, pour la dernière itération, pris en compte pour la suite du traitement.

Le codage de canal 161 de la figure 16 peut être un turbo code. Dans cz cas, la fonction 174 de la figure 17 est un turbo décodage avec un nombre d'itérations de turbodécodage qui peut être différent selon chaque itération du schéma global.

## 8. Association avec codage de canal et précodage

Selon un autre aspect de l'invention, on peut coder les symboles au moyen d'un codage de canal , puis les précoder. On procède ensuite au codage espace-temps.

On prévoit à l'émission un codage de canal (opération très connue dans la littérature) 191 sur les bits à transmettre suivi d'un entrelacement 192 et d'une opération de modulation 193. Les symboles obtenus sont ensuite précodés 194 et enfin entrelacés 195. Les symboles résultant sont enfin codés au moyen d'un code espace-temps en bloc 1910. Les signaux sont émis à l'aide de n antennes d'émission $E_i$, via n canaux de transmission $h_p$, vers une antenne de réception $R_i$ (plusieurs antennes de réception peuvent bien sûr être prévues).

A la réception, on effectue tout d'abord un décodage espace-temps 195, symétrique du codage effectué à l'émission, puis une égalisation 196, par exemple de type MMSE.

On retrouve ensuite les différentes itérations, selon l'approche décrite précédemment :

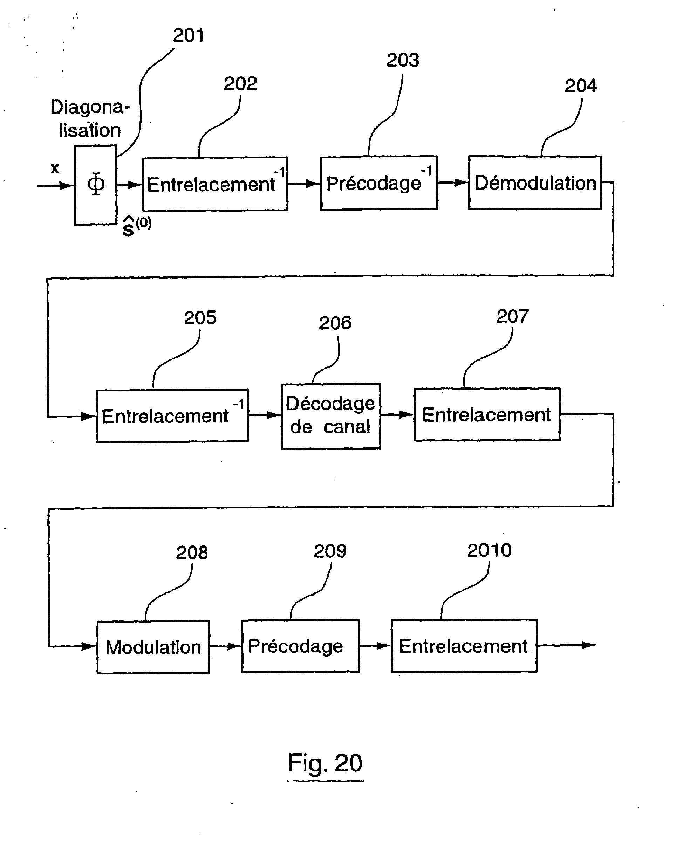

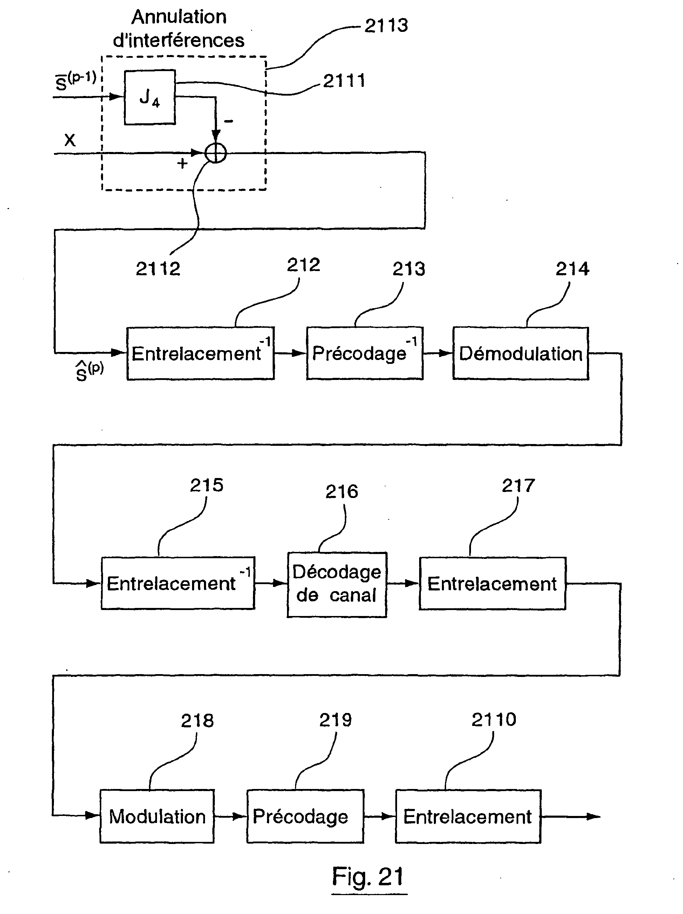

- itération 1 : diagonalisation 197, détaillée en figure 20 ;
- itérations suivantes : annulation d'interférences $198_2$ à $198_p$, détaillée en figure 21.

Comme illustré en figure 20, l'étape de diagonalisation comprend tout d'abord une diagonalisation 201 proprement dite, telle que décrite précédemment. Elle est suivie d'une opération de désentrelacement 202 symétrique de l'entrelacement de l'émission 195, puis d'un précodage inverse 203, symétrique du précodage effectué à l'émission.

On procède ensuite à une démodulation 204 symétrique à celle de l'émission. Cette démodulation peut être douce au sens où elle peut délivrer une information de confiance sur les bits démodulés.

Ensuite, on effectue un désentrelacement 205 symétrique à celui de l'émission (192), puis un décodage de canal 206 symétrique du codage de canal effectué à l'émission. Ce décodage produit en sortie une probabilité sur les bits codés. Le décodeur peut traiter des informations douces en entrée comme en sortie. Ensuite on effectue un entrelacement 207 identique à celui de l'émission (192), puis on effectue une modulation 208 identique encore à l'émission. Cette modulation peut accepter des données douces en entrée et peu produire en sortie des symboles tenant compte de la confiance des bits d'entrée, i.e. des symboles pondérés. Ces symboles sont ensuite précodés 209 comme à l'émission et entrelacés 2010 tout comme à l'émission.

Le signal correspondant alimente la première itération d'annulation d'interférences, comme illustré en figure 21. Il est multiplié par une matrice d'interférence 2111, dont le résultat est soustrait (2112) du signal égalisé, pour effectuer l'annulation d'interférence 211. Dans le cas de la mise en oeuvre de décisions souples, une information de fiabilité 2113 peut être prise en compte.

Ensuite, dans chaque itération, on répète les opérations également effectuées lors de l'étape de diagonalisation : désentrelacement 212 symétrique de l'entrelacement de l'émission (195), puis d'un précodage inverse 213, symétrique du précodage effectué à l'émission.

Puis on procède à une démodulation 214 symétrique à celle de l'émission. Cette démodulation peut être douce au sens où elle peut délivrer une information de confiance sur les bits démodulés. Ensuite on effectue un désentrelacement 215 symétrique à celui de l'émission (192), puis un décodage de canal 216 symétrique du codage de canal effectué à l'émission. Ce décodage produit en sortie une probabilité sur les bits codés. Le décodeur peut traiter des informations douces en entrée comme en sortie.

Ensuite, on effectue un entrelacement 217 identique à celui de l'émission (192), puis on effectue une modulation 218 identique encore à l'émission. Cette modulation peut accepter des données douces en entrée et peu produire en sortie des symboles tenant compte de la confiance des bits d'entrée, c'est-à-dire des symboles pondérés. Ces symboles sont ensuite précodés 219 comme à l'émission et entrelacés 2110 tout comme à l'émission. Le résultat $\bar{s}^{(p-1)}$ est réintroduit dans l'itération suivante ou, pour la dernière itération, pris en compte pour la suite du traitement.

### 9. Diagonalisation et égalisation conjointes

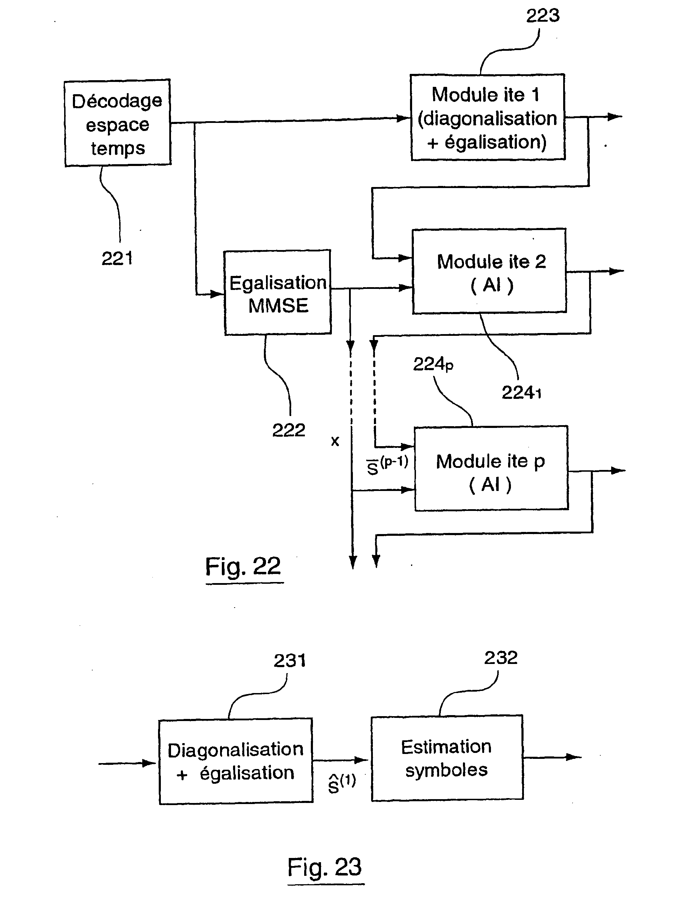

Il est possible d'intégrer l'égalisation dans la diagonalisation, comme illustré en figure 22. Conformément aux systèmes précédents, le signal reçu est d'abord décodé (module décodage espace-temps 221). Il est ensuite diagonalisé et égalisé (module de diagonalisation et égalisation 223). Dans le cas MMSE, l'opération consiste à multiplier le signal décodé par la matrice : $\left( H^H H + \dfrac{1}{SNR} I \right)^{-1}$ où $H$ est la matrice représentative du codage et du canal définie précédemment, $SNR$ le rapport signal à bruit; $I$ la matrice identité et $(.)^{-1}$' l'opération d'inversion matricielle. Dans le cas ZF, on multiplie le signal décodé par la matrice $(H^H H)^{-1}$.

Ensuite on estime classiquement les symboles.

Les itérations suivantes tiennent compte de l'égalisation MMSE 22 effectuée sur les données délivrées par le décodage espace-temps 221. Une itération est illustrée par la figure 23,

Elle comprend donc une étape de diagonalisation et d'égalisation 231 utilisant la matrice : $\left( H^H H + \dfrac{1}{SNR} I \right)^{-1}$ dans le cas MMSE, puis une étape 232 d'estimation des symboles.

Il est toujours possible d'intégrer le précodage et/ou codage de canal conformément aux sections 5 à 8.

### 10 - amélioration de l'estimation de canal

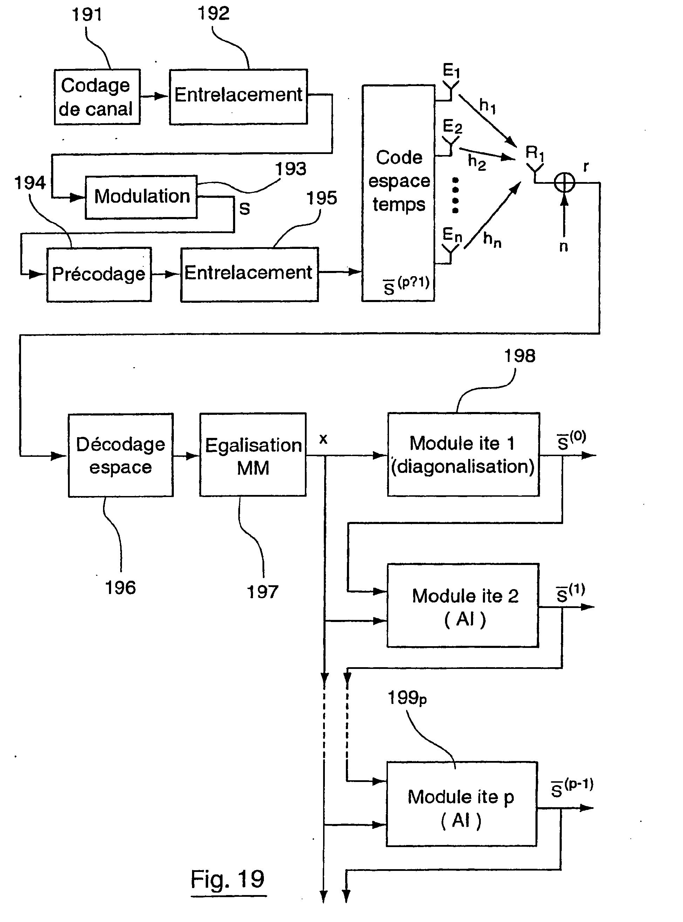

Il est possible d'introduire de l'estimation de canal dans les itérations l'estimation de canal est classiquement réalisée en amont des fonctions décrites dans le document. Elle est sensée être faite de manière parfaite avant le décodage espace temps, puisque les données hi sont nécessaires pour cette fonction 196 de figure 19 ainsi que pour la plupart des suivantes (égalisation, diagonalisation, décodage de canal....).

On peut envisager un mode de fonctionnement où des données estimées à la fin de chaque itération peuvent être utilisées en vue d'une nouvelle estimation de canal menée en parallèle. Les données hi ainsi nouvellement estimées peuvent être utilisées à l'itération suivante.

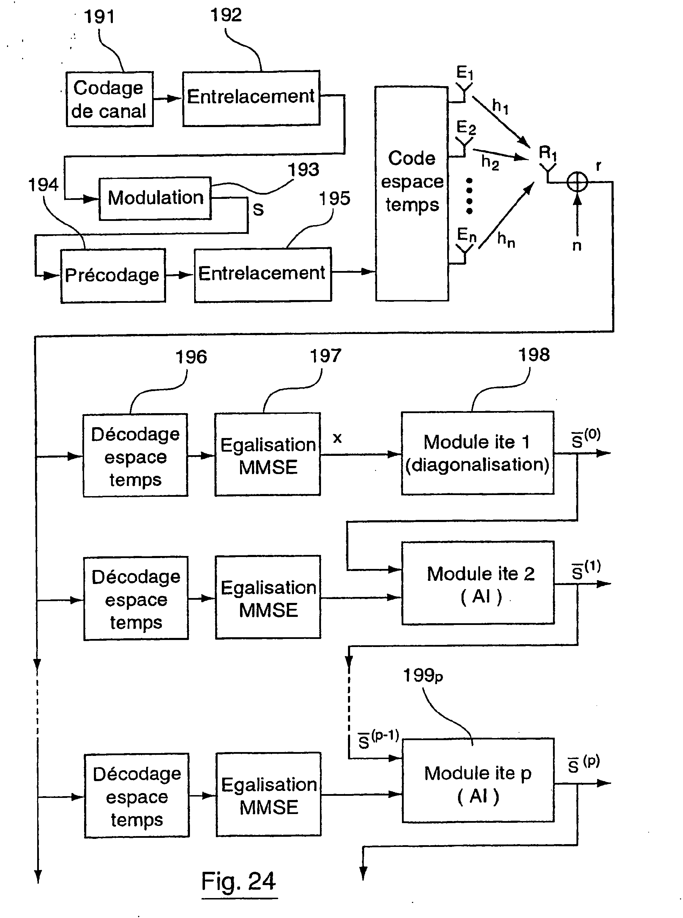

On peut également reboucler avant le module 196 comme sur la figure 24. Dans ce cas, chaque itération comprend décodage espace-temps, égalisation et un module tel que décrit précédemment.

### 11. Avantages de l'invention

Selon ces différents aspects, l'invention présente de nombreux avantages, tels que :

- la reconstruction avec prise en compte des fiabilités au fil des itérations (à inclure par exemple dans schéma avec précodage) ;
- l'application possible aux canaux avec IES ;
- l'utilisation d'un nombre quelconque d'antennes (4,8, ...) ;
- l'utilisation avec n'importe quel code espace-temps ;
- l'association avec un précodage de diversité ;
- la mise en oeuvre d'une égalisation...

On peut par ailleurs encore améliorer l'efficacité du procédé de l'invention en mettant en oeuvre un contrôle automatique de gain (CAG), avant ou après ladite étape d'égalisation et/ou lors desdites itérations,

### Annexe 1 : références

1. Tujkovic D., "Recursive Space-Time Treillis Codes for Turbo coded Modulation", IEEE GLOBECOM, 2000, p. 1010-1015, vol.2

2. Jayaweera S.K., Poor H.V.," Turbo (iterative) decoding of a unitary space-time code with a convolutional code", IEEE VTC Spring 2002, p. 1020 -1024, vol.2

3. Guillen i Fabregas A., Caire G., "Analysis and design of natural and threaded space-time codes with iterative decoding", Conference on Signals, Systems and Computers, 2002, p. 279-283, Vol. 1

4. G. Bauch, N. Al-Dahir, "Reduced-complexity Space-Time Turbo-Equalization for Frequency-Selective MIMO Channels", IEEE journal on Selected areas in communications, 2002

5. Boariu A., Ionescu M., "A class of nonorthogonal rate-one space-time block codes with controlled interference", IEEE trans. on wireless comm., mar. 2003, pp. 270-276, vol. 2

6. Tirkkonen O., Boariu A. et Hottinen A., "Minimal non-orthogonality rate 1 space-time block code for 3+ tx antennas , in proceedings of IEEE ISSTA'00, sept. 2000, New jersey, USA.

7. Jafarkhani H., "A Quasi-Orthogonal Space-Time Block Code", IEEE WCNC, 2000, p. 1457-1458 vol.1

8. Alamouti S. M., "A Simple Transmitter Diversity Scheme for Wireless Communications", IEEE JSAC, oct 1998, p. 1457-1458

9. Tarokh V., Jafarkhani H. et Calderbanck R. "Space-time block coding for wireless communications: performance results", IEEE JSAC, mar. 1999, pp. 451-460, vol. 17

10. V. Le Nir et M. Hélard, "Reduced-complexity space-time block coding and decoding schemes with block linear precoding", Electronics Letters, 10th July 2003, Vol. 39, N° 14.

## Revendications

1. Procédé de décodage d'un signal reçu comprenant des symboles distribués dans l'espace, le temps et/ou en fréquence à l'aide d'une matrice de codage espace-temps ou espace-fréquence, comprenant les étapes suivantes :

   □ décodage (81) espace-temps ou espace-fréquence, délivrant un signal décodé ;
   □ égalisation (85) dudit signal décodé, délivrant un signal égalisé ;
   □ première estimation (86) des symboles formant ledit signal, permettant de fournir un signal estimé ;
   et mettant en oeuvre au moins une itération ($87_2$,...,$87_p$) d'une étape d'annulation d'interférence, mettant en oeuvre les sous-étapes suivantes :
   □ soustraction (1012) audit signal égalisé dudit signal estimé multiplié par une matrice d'interférence (1011), délivrant un signal optimiste
   □ prédécodage (102) de diversité dudit signal optimisé, inverse d'un précodage de diversité mis en oeuvre à l'émission dudit signal, délivrant des données prédécodées ;
   □ estimation (103) des symboles formant ledit signal optimisé, à partir des données prédécodées, délivrant de nouveaux symboles estimés ;
   □ précodage (104) de diversité, identique audit précodage de diversité mis en oeuvre lors de l'émission, appliqué sur lesdits nouveaux symboles estimés pour fournir un nouveau signal estimé, sauf pour la dernière itération ;

   **caractérisé en ce que** ladite première estimation (86) comprend :

   - une étape de diagonalisation, par multiplication dudit signa égalisé par une matrice de diagonalisation, aboutissant à une matrice globale de codage, de canal et de décodage diagonale tenant compte au moins de ladite matrice de codage et d'une matrice de décodage, correspondant à la matrice transposée conjuguée de ladite matrice de codage,
   - une étape de traitement des symboles formant ledit signal, à partir de ladite étape de diagonalisation, délivrant des symboles estimés ;
   - une étape de précodage de diversité, identique audit précodage de diversité mis en oeuvre lors de l'émission, appliqué sur lesdits symboles estimés, pour fournir un signal estimé.

2. Procédé de décodage selon la revendication 1, **caractérisé en ce que** ladite étape de traitement des symboles comprend également les étapes suivantes :

   □ prédécodage (92) de diversité, inverse d'un précodage de diversité mis en oeuvre à l'émission dudit signal, alimentée par ladite étape de diagonalisation et délivrant des données prédécodées ;
   □ estimation (93) des symboles formant ledit signal, à partir desdites données prédécodées, délivrant lesdits symboles estimés.

**3.** Procédé de décodage selon la revendication 2, **caractérisé en ce que** lesdites étapes de décodage espace-temps et d'égalisation et/ou lesdites étapes d'égalisation et de transformation sont effectuées conjointement.

**4.** Procédé de décodage selon l'une quelconque des revendications 1 à 3, **caractérisé en ce que**, lesdits symboles codés étant émis à l'aide d'au moins deux antennes, on tient compte globalement des différents canaux de transmission correspondants.

**5.** Procédé de décodage selon l'une quelconque des revendications 2 à 4, **caractérisé en ce que** ladite étape d'égalisation met en oeuvre une égalisation selon une des techniques appartenant au groupe comprenant :

- égalisation de type « Minimum Mean Square Error » MMSE ;
- égalisation de type « Equal Gain Combining » EGC ;
- égalisation de type « Zero Forcing » ZF;
- égalisation tenant compte d'une information représentative du rapport signal à bruit entre le signal reçu et le bruit de réception.

**6.** Procédé de décodage selon l'une quelconque des revendications 2 à 5, **caractérisé en ce que** lesdites étapes d'estimation de symboles mettent en oeuvre une décision souple, associant une information de confiance à une décision, et **en ce que** la ou lesdites étapes de soustraction tiennent compte desdites information de confiance.

**7.** Procédé de décodage selon l'une quelconque des revendications 1 à 6, **caractérisé en ce que** ledit signal reçu est un signal multiporteuse.

**8.** Procédé de décodage selon l'une quelconque des revendications 1 à 7, **caractérisé en ce que** ledit précodage est obtenu par l'une des méthodes suivantes :

- étalement de spectre ;
- précodage linéaire.

**9.** Procédé de décodage selon l'une quelconque des revendications 1 à 8, **caractérisé en ce qu'**il met en oeuvre une étape de contrôle automatique de gain, avant ou après ladite étape d'égalisation et/ou lors d'au moins une desdites itérations,

**10.** Procédé de décodage selon l'une quelconque des revendications 1 à 9, **caractérisé en ce qu'**il comprend une étape de décodage de canal, symétrique d'une étape de codage de canal mis en oeuvre à l'émission.

**11.** Procédé de décodage selon la revendication 10, **caractérisé en ce que** ladite étape de décodage de canal met en oeuvre un turbo-décodage.

**12.** Procédé de décodage selon l'une quelconque des revendications 1 à 11, **caractérisé en ce qu'**il comprend au moins une étape de désentrelacement et au moins une étape de ré-entrelacement, correspondant à un entrelacement mis en oeuvre à l'émission.

**13.** Procédé de décodage selon l'une quelconque des revendications 1 à 12, **caractérisé en ce qu'**il comprend au moins une étape d'amélioration d'une estimation de canal, tenant compte des données estimées lors d'au moins une desdites itérations.

**14.** Procédé de décodage selon l'une quelconque des revendications 1 à 13, **caractérisé en ce que**, ledit signal reçu étant transmis à l'aide de quatre antennes, ladite matrice globale vaut :

$$G = \gamma \begin{bmatrix} A & 0 & 0 & J \\ 0 & A & -J & 0 \\ 0 & -J & A & 0 \\ J & 0 & 0 & A \end{bmatrix}$$

avec :

$$A = |h_1|^2 + |h_2|^2 + |h_3|^2 + |h_4|^2$$

$$J = 2\mathrm{Re}\{h_1 h_4^* - h_2 h_3^*\}\,,$$

représentant l'interférence, et

$$\gamma = \frac{1}{|h_1|^2 + |h_2|^2 + |h_3|^2 + |h_4|^2 + \dfrac{1}{SNR}}$$

où :

$$H = \begin{pmatrix} h_1 & h_2 & h_3 & h_4 \\ -h_2^* & h_1^* & -h_4^* & h_3^* \\ -h_3^* & -h_4^* & h_1^* & h_2^* \\ h_4 & -h_3 & -h_2 & h_1 \end{pmatrix}$$

est une matrice regroupant le codage espace-temps et le canal de transmission,
SNR représente le rapport signal à bruit, et $h_i$ est un coefficient complexe d'évanouissement du canal de transmission entre une desdites antennes d'émission $i$ et une antenne de réception, pour $1 \leq i \leq 4$.

15. Procédé de décodage selon l'une quelconque des revendications 1 à 13, **caractérisé en ce que**, ledit signal reçu étant transmis à l'aide de huit antennes, ladite matrice globale vaut :

$$G = \gamma \cdot H^H \cdot H = \gamma \begin{pmatrix} A & 0 & 0 & 0 & J & 0 & 0 & 0 \\ 0 & A & 0 & 0 & 0 & J & 0 & 0 \\ 0 & 0 & A & 0 & 0 & 0 & J & 0 \\ 0 & 0 & 0 & A & 0 & 0 & 0 & J \\ J & 0 & 0 & 0 & A & 0 & 0 & 0 \\ 0 & J & 0 & 0 & 0 & A & 0 & 0 \\ 0 & 0 & J & 0 & 0 & 0 & A & 0 \\ 0 & 0 & 0 & J & 0 & 0 & 0 & A \end{pmatrix}$$

avec

$$A = 2 \cdot \left( |h_1|^2 + |h_2|^2 + |h_3|^2 + |h_4|^2 + |h_5|^2 + |h_6|^2 + |h_7|^2 + |h_8|^2 \right)$$

et

$$J = 2 \quad \Re\left\{ h_1 h_5^* + h_2 h_6^* + h_3 h_7^* + h_4 h_8^* \right\}$$

et

$$\gamma = \frac{1}{|h_1|^2 + |h_2|^2 + |h_3|^2 + |h_4|^2 + |h_5|^2 + |h_6|^2 + |h_7|^2 + |h_8|^2 + \frac{1}{SNR}} \cdot \frac{1}{2}$$

où :

$$H = \begin{bmatrix}
h_1 & h_2 & h_3 & h_4 & h_5 & h_6 & h_7 & h_8 \\
h_2 & -h_1 & h_4 & -h_3 & h_6 & -h_5 & h_8 & -h_7 \\
h_3 & -h_4 & -h_1 & h_2 & h_7 & -h_8 & -h_5 & h_6 \\
h_4 & h_3 & -h_2 & -h_1 & h_8 & h_7 & -h_6 & -h_5 \\
h_1^* & h_2^* & h_3^* & h_4^* & h_5^* & h_6^* & h_7^* & h_8^* \\
h_2^* & -h_1^* & h_4^* & -h_3^* & h_6^* & -h_5^* & h_8^* & -h_7^* \\
h_3^* & -h_4^* & -h_1^* & h_2^* & h_7^* & -h_8^* & -h_5^* & h_6^* \\
h_4^* & h_3^* & -h_2^* & -h_1^* & h_8^* & h_7^* & -h_6^* & -h_5^* \\
h_5 & h_6 & h_7 & h_8 & h_1 & h_2 & h_3 & h_4 \\
h_6 & -h_5 & h_8 & -h_7 & h_2 & -h_1 & h_4 & -h_3 \\
h_7 & -h_8 & -h_5 & h_6 & h_3 & -h_4 & -h_1 & h_2 \\
h_8 & h_7 & -h_6 & -h_5 & h_4 & h_3 & -h_2 & -h_1 \\
h_5^* & h_6^* & h_7^* & h_8^* & h_1^* & h_2^* & h_3^* & h_4^* \\
h_6^* & -h_5^* & h_8^* & -h_7^* & h_2^* & -h_1^* & h_4^* & -h_3^* \\
h_7^* & -h_8^* & -h_5^* & h_6^* & h_3^* & -h_4^* & -h_1^* & h_2^* \\
h_8^* & h_7^* & -h_6^* & -h_5^* & h_4^* & h_3^* & -h_2^* & -h_1^*
\end{bmatrix}$$

est une matrice regroupant le codage espace-temps et le canal de transmission,
$H^H$ est la transposée conjuguée de la matrice H, SNR représente le rapport signal à bruit et $h_i$ est un coefficient complexe d'évanouissement du canal de transmission entre une desdites antennes d'émission $i$ et une antenne de réception, pour $1 \leq i \leq 8$.

**16.** Procédé de décodage selon la revendication 1, **caractérisé en ce que** ladite étape de traitement des symboles comprend également les étapes suivantes :

☐ démodulation (204), symétrique à une modulation mise en oeuvre à l'émission ;
☐ désentrelacement (205), symétrique à un entrelacement mis en oeuvre à l'émission ;
☐ décodage de canal (206), symétrique à un codage de canal mis en oeuvre à l'émission ;
☐ ré-entrelacement (207), identique à celui mis en oeuvre à l'émission ;
☐ ré-modulation, identique à celle mise en oeuvre à l'émission, délivrant lesdits symboles estimés.

**17.** Récepteur mettant en oeuvre des moyens de décodage d'un signal reçu comprenant des symboles distribués dans l'espace et le temps et/ou en fréquence à l'aide d'une matrice de codage espace-temps ou espace-fréquence, comprenant :

☐ des moyens de décodage espace-temps ou espace-fréquence, délivrant un signal décodé ;

☐ des moyens d'égalisation dudit signal décodé, délivrant un signal égalisé ;

☐ des premiers moyens d'estimation des symboles formant ledit signal; permettant de fournir un signal estimé ;

☐ des moyens de soustraction audit signal égalisé dudit signal estimé multiplié par une matrices d'interférence, délivrant un signal optimisé ;

☐ des moyens de prédécodage de diversité dudit signal optimisé, inverse d'un précodage de diversité mis en oeuvre à l'émission dudit signal, délivrant des données prédécodées ;

☐ des seconds moyens d'estimation des symboles formant ledit signal optimisé, à partir des données prédécodées, délivrant de nouveaux symboles estimés ;

☐ des moyens de précodage de diversité, identique audit précodage de diversité mis en oeuvre lors de l'émission, appliqué sur lesdits nouveaux symboles estimés pour fournir un nouveau signal estimé ;

lesdits moyens étant mis en oeuvre au moins une fois pour chaque symbole

**caractérisé en ce que** lesdits premiers moyens d'estimation comprennent :

- des moyens de diagonalisation, par multiplication dudit signal égalisé par une matrice de diagonalisation, aboutissant à une matrice globale de codage, de canal et de décodage diagonale tenant compte au moins de ladite matrice de codage et d'une matrice de décodage, correspondant à la matrice transposée conjuguée de ladite matrice de codage,
- des moyens de traitement des symboles formant ledit signal, à partir desdits moyens de diagonalisation, délivrant des symboles estimés ;
- des moyens de précodage de diversité, identique audit précodage de diversité mis en oeuvre lors de l'émission, appliqué sur lesdits symboles estimés, pour fournir un signal estimé.

18. Procédé de codage et de décodage, **caractérisé en ce que** le codage met en oeuvre une matrice de codage espace-temps telle que :

$$
H = \begin{bmatrix}
h_1 & h_2 & h_3 & h_4 & h_5 & h_6 & h_7 & h_8 \\
h_2 & -h_1 & h_4 & -h_3 & h_6 & -h_5 & h_8 & -h_7 \\
h_3 & -h_4 & -h_1 & h_2 & h_7 & -h_8 & -h_5 & h_6 \\
h_4 & h_3 & -h_2 & -h_1 & h_8 & h_7 & -h_6 & -h_5 \\
h_1^* & h_2^* & h_3^* & h_4^* & h_5^* & h_6^* & h_7^* & h_8^* \\
h_2^* & -h_1^* & h_4^* & -h_3^* & h_6^* & -h_5^* & h_8^* & -h_7^* \\
h_3^* & -h_4^* & -h_1^* & h_2^* & h_7^* & -h_8^* & -h_5^* & h_6^* \\
h_4^* & h_3^* & -h_2^* & -h_1^* & h_8^* & h_7^* & -h_6^* & -h_5^* \\
h_5 & h_6 & h_7 & h_8 & h_1 & h_2 & h_3 & h_4 \\
h_6 & -h_5 & h_8 & -h_7 & h_2 & -h_1 & h_4 & -h_3 \\
h_7 & -h_8 & -h_5 & h_6 & h_3 & -h_4 & -h_1 & h_2 \\
h_8 & h_7 & -h_6 & -h_5 & h_4 & h_3 & -h_2 & -h_1 \\
h_5^* & h_6^* & h_7^* & h_8^* & h_1^* & h_2^* & h_3^* & h_4^* \\
h_6^* & -h_5^* & h_8^* & -h_7^* & h_2^* & -h_1^* & h_4^* & -h_3^* \\
h_7^* & -h_8^* & -h_5^* & h_6^* & h_3^* & -h_4^* & -h_1^* & h_2^* \\
h_8^* & h_7^* & -h_6^* & -h_5^* & h_4^* & h_3^* & -h_2^* & -h_1^*
\end{bmatrix}
$$

et $h_i$ est un coefficient complexe d'évanouissement du canal de transmission entre une antennes d'émission $i$ et une antenne de réception, pour $1 \leq i \leq 8$,

et **en ce que** le décodage est un décodage selon la revendication 15.

**Claims**

1. Method of decoding a received signal comprising symbols that are distributed in space, time and/or frequency using a space-time or space-frequency coding matrix,
comprising the following steps:

> • space-time or space-frequency decoding (81), delivering a decoded signal;
> • equalization (85) of said decoded signal, delivering an equalized signal;
> • first estimation (86) of the symbols forming said signal, making it possible to provide an estimated signal;
> and implementing at least one iteration ($87_2$, ..., $87_p$) of an interference-cancelling step, implementing the following substeps:
> • subtraction (1012) from said equalized signal of said estimated signal multiplied by an interference matrix (1011), delivering an optimized signal;
> • diversity predecoding (102) of said optimized signal, the reverse of a diversity precoding implemented on transmission of said signal, delivering predecoded data;
> • estimation (103) of the symbols forming said optimized signal, on the basis of the predecoded data, delivering new estimated symbols;
> • diversity precoding (104), identical to said diversity precoding implemented on transmission, applied to said new estimated symbols to provide a new estimated signal, except for the last iteration;

> **characterized in that** said first estimation (86) comprises:

> - a step of diagonalization, by multiplication of said equalized signal by a diagonalization matrix, culminating in a global diagonal coding, channel and decoding matrix taking into account at least said coding matrix and a decoding matrix, corresponding to the conjugate transposed matrix of said coding matrix,
> - a step for processing of the symbols forming said signal, from said diagonalization step, delivering estimated symbols;
> - a diversity precoding step, identical to said diversity precoding implemented on transmission, applied to said estimated symbols, to provide an estimated signal.

2. Decoding method according to Claim 1, **characterized in that** said symbol processing step also comprises the following steps:

> • diversity predecoding (92), the reverse of a diversity precoding implemented on transmission of said signal, fed by said diagonalization step and delivering predecoded data;
> • estimation (93) of the symbols forming said signal, based on said predecoded data, delivering said estimated symbols.

3. Decoding method according to Claim 2, **characterized in that** said space-time decoding and equalization steps and/or said equalization and transformation steps are performed jointly.

4. Decoding method according to any one of Claims 1 to 3, **characterized in that**, said coded symbols being transmitted using at least two antennas, the different corresponding transmission channels are globally taken into account.

5. Decoding method according to any one of Claims 2 to 4, **characterized in that** said equalization step implements an equalization according to one of the techniques belonging to the group comprising:

> - equalization of "Minimum Mean Square Error" MMSE type;
> - equalization of "Equal Gain Combining" EGC type;
> - equalization of "Zero Forcing" ZF type;
> - equalization taking into account an indication representative of the signal-to-noise ratio between the received signal and the reception noise.

6. Decoding method according to any one of Claims 2 to 5, **characterized in that** said symbol estimation steps implement a flexible decision, associating a confidence indication with a decision, and **in that** the subtraction step or steps take account of said confidence indication.

7. Decoding method according to any one of Claims 1 to 6, **characterized in that** said received signal is a multi-carrier signal.

8.  Decoding method according to any one of Claims 1 to 7, **characterized in that** said precoding is obtained by one of the following methods:

    - spectrum spreading;
    - linear precoding.

9.  Decoding method according to any one of Claims 1 to 8, **characterized in that** it implements an automatic gain control step, before or after said equalization step and/or during at least one of said iterations.

10. Decoding method according to any one of Claims 1 to 9, **characterized in that** it comprises a channel decoding step, symmetrical with a channel coding step implemented on transmission.

11. Decoding method according to Claim 10, **characterized in that** said channel decoding step implements a turbo-decoding.

12. Decoding method according to any one of Claims 1 to 11, **characterized in that** it comprises at least one de-interleaving step and at least one re-interleaving step, corresponding to an interleaving implemented on transmission.

13. Decoding method according to any one of Claims 1 to 12, **characterized in that** it comprises at least one step for enhancing a channel estimation, taking into account data estimated during at least one of said iterations.

14. Decoding method according to any one of Claims 1 to 13, **characterized in that**, said received signal being transmitted using four antennas, said global matrix is equal to:

$$G = \gamma \begin{bmatrix} A & 0 & 0 & J \\ 0 & A & -J & 0 \\ 0 & -J & A & 0 \\ J & 0 & 0 & A \end{bmatrix}$$

with:

$$A = |h_1|^2 + |h_2|^2 + |h_3|^2 + |h_4|^2$$

$$J = 2\operatorname{Re}\{h_1 h_4^* - h_2 h_3^*\},$$

representing interference, and

$$\gamma = \frac{1}{|h_1|^2 + |h_2|^2 + |h_3|^2 + |h_4|^2 + \dfrac{1}{SNR}}$$

where:

$$H = \begin{bmatrix} h_1 & h_2 & h_3 & h_4 \\ -h_2^* & h_1^* & -h_4^* & h_3^* \\ -h_3^* & -h_4^* & h_1^* & h_2^* \\ h_4 & -h_3 & -h_2 & h_1 \end{bmatrix}$$

is a matrix combining the
space-time coding and the transmission channel, SNR represents the signal-to-noise ratio,
and $h_i$ is a complex fading coefficient of the transmission channel between one of said transmit antennas $i$ and a
receive antenna, for $1 \leq i \leq 4$.

**15.** Decoding method according to any one of Claims 1 to 13, **characterized in that**, said received signal being transmitted using eight antennas, said global matrix is equal to:

$$G = \gamma \cdot H^H \cdot H = \gamma \begin{bmatrix} A & 0 & 0 & 0 & J & 0 & 0 & 0 \\ 0 & A & 0 & 0 & 0 & J & 0 & 0 \\ 0 & 0 & A & 0 & 0 & 0 & J & 0 \\ 0 & 0 & 0 & A & 0 & 0 & 0 & J \\ J & 0 & 0 & 0 & A & 0 & 0 & 0 \\ 0 & J & 0 & 0 & 0 & A & 0 & 0 \\ 0 & 0 & J & 0 & 0 & 0 & A & 0 \\ 0 & 0 & 0 & J & 0 & 0 & 0 & A \end{bmatrix}$$

with

$$A = 2 \cdot \left( |h_1|^2 + |h_2|^2 + |h_3|^2 + |h_4|^2 + |h_5|^2 + |h_6|^2 + |h_7|^2 + |h_8|^2 \right)$$

$$J = 2\,\mathrm{Re}\left\{ h_1 h_5^* + h_2 h_6^* + h_3 h_7^* + h_4 h_8^* \right\}$$

and

$$\gamma = \frac{1}{2} \cdot \frac{1}{|h_1|^2 + |h_2|^2 + |h_3|^2 + |h_4|^2 + |h_5|^2 + |h_6|^2 + |h_7|^2 + |h_8|^2 + \dfrac{1}{SNR}}$$

where:

$$H = \begin{bmatrix}
h_1 & h_2 & h_3 & h_4 & h_5 & h_6 & h_7 & h_8 \\
h_2 & -h_1 & h_4 & -h_3 & h_6 & -h_5 & h_8 & -h_7 \\
h_3 & -h_4 & -h_1 & h_2 & h_7 & -h_8 & -h_5 & h_6 \\
h_4 & h_3 & -h_2 & -h_1 & h_8 & h_7 & -h_6 & -h_5 \\
h_5^* & h_6^* & h_7^* & h_8^* & h_1^* & h_2^* & h_3^* & h_4^* \\
h_2^* & -h_1^* & h_4^* & -h_3^* & h_6^* & -h_5^* & h_8^* & -h_7^* \\
h_3^* & -h_4^* & -h_1^* & h_2^* & h_7^* & -h_8^* & -h_5^* & h_6^* \\
h_4^* & h_3^* & -h_2^* & -h_1^* & h_8^* & h_7^* & -h_6^* & -h_5^* \\
h_5 & h_6 & h_7 & h_8 & h_1 & h_2 & h_3 & h_4 \\
h_6 & -h_5 & h_8 & -h_7 & h_2 & -h_1 & h_4 & -h_3 \\
h_7 & -h_8 & -h_5 & h_6 & h_3 & -h_4 & -h_1 & h_2 \\
h_8 & h_7 & -h_6 & -h_5 & h_4 & h_3 & -h_2 & -h_1 \\
h_1^* & h_6^* & h_7^* & h_8^* & h_5^* & h_6^* & h_3^* & h_4^* \\
h_6^* & -h_5^* & h_8^* & -h_7^* & h_2^* & -h_1^* & h_4^* & -h_3^* \\
h_7^* & -h_8^* & -h_5^* & h_6^* & h_3^* & -h_4^* & -h_1^* & h_2^* \\
h_8^* & h_7^* & -h_6^* & -h_5^* & h_4^* & h_3^* & -h_2^* & -h_1^*
\end{bmatrix}$$

is a matrix combining the space-time coding and the transmission channel,
$H^H$ is the conjugate transpose of the matrix H, SNR represents the signal-to-noise ratio
and $h_i$ is a complex fading coefficient of the transmission channel between one of said transmit antennas $i$ and a receive antenna, for $1 \leq i \leq 8$.

16. Decoding method according to Claim 1, **characterized in that** said symbol processing step also comprises the following steps:

   • demodulation (204), symmetrical to a modulation implemented on transmission;
   • de-interleaving (205), symmetrical to an interleaving implemented on transmission;
   • channel decoding (206), symmetrical to a channel coding implemented on transmission;
   • re-interleaving (207), identical to that implemented on transmission;
   • remodulation, identical to that implemented on transmission, delivering said estimated symbols.

17. Receiver implementing means of decoding a received signal comprising symbols distributed in space and time and/or frequency using a space-time or space-frequency coding matrix, comprising:

   • space-time or space-frequency decoding means, delivering a decoded signal;
   • means of equalizing said decoded signal, delivering an equalized signal;
   • first means of estimating the symbols forming said signal, making it possible to provide an estimated signal;
   • means of subtracting from said equalized signal said estimated signal multiplied by an interference matrix, delivering an optimized signal;
   • means of diversity predecoding said optimized signal, the reverse of a diversity precoding implemented on transmission of said signal, delivering predecoded data;
   • second means of estimating the symbols forming said optimized signal, based on the predecoded data, delivering new estimated symbols;
   • diversity precoding means, identical to said diversity precoding implemented on transmission, applied to said new estimated symbols to provide a new estimated signal;

said means being implemented at least once for each symbol, **characterized in that** said first estimation means comprise:

- diagonalization means, based on multiplication of said equalized signal by a diagonalization matrix, culminating in a global diagonal coding, channel and decoding matrix taking into account at least said coding matrix and decoding matrix, corresponding to the conjugate transposed matrix of said coding matrix,
- means of processing the symbols forming said signal, based on said diagonalization means, delivering estimated symbols;
- diversity precoding means, identical to said diversity precoding implemented on transmission, applied to said estimated symbols, to provide an estimated signal.

**18.** Coding and decoding method, **characterized in that** the coding implements a space-time coding matrix such as:

$$
H = \begin{bmatrix}
h_1 & h_2 & h_3 & h_4 & h_5 & h_6 & h_7 & h_8 \\
h_2 & -h_1 & h_4 & -h_3 & h_6 & -h_5 & h_8 & -h_7 \\
h_3 & -h_4 & -h_1 & h_2 & h_7 & -h_8 & -h_5 & h_6 \\
h_4 & h_3 & -h_2 & -h_1 & h_8 & h_7 & -h_6 & -h_5 \\
h_1^* & h_2^* & h_3^* & h_4^* & h_5^* & h_6^* & h_7^* & h_8^* \\
h_2^* & -h_1^* & h_4^* & -h_3^* & h_6^* & -h_5^* & h_8^* & -h_7^* \\
h_3^* & -h_4^* & -h_1^* & h_2^* & h_7^* & -h_8^* & -h_5^* & h_6^* \\
h_4^* & h_3^* & -h_2^* & -h_1^* & h_8^* & h_7^* & -h_6^* & -h_5^* \\
h_5 & h_6 & h_7 & h_8 & h_1 & h_2 & h_3 & h_4 \\
h_6 & -h_5 & h_8 & -h_7 & h_2 & -h_1 & h_4 & -h_3 \\
h_7 & -h_8 & -h_5 & h_6 & h_3 & -h_4 & -h_1 & h_2 \\
h_8 & h_7 & -h_6 & -h_5 & h_4 & h_3 & -h_2 & -h_1 \\
h_5^* & h_6^* & h_7^* & h_8^* & h_1^* & h_2^* & h_3^* & h_4^* \\
h_6^* & -h_5^* & h_8^* & -h_7^* & h_2^* & -h_1^* & h_4^* & -h_3^* \\
h_7^* & -h_8^* & -h_5^* & h_6^* & h_3^* & -h_4^* & -h_1^* & h_2^* \\
h_8^* & h_7^* & -h_6^* & -h_5^* & h_4^* & h_3^* & -h_2^* & -h_1^*
\end{bmatrix}
$$

and $h_i$ is a complex fading coefficient of the transmission channel between a transmit antenna $i$ and a receive antenna, for $1 \leq i \leq 8$,
and **in that** the decoding is a decoding according to Claim 15.

## Patentansprüche

**1.** Verfahren zum Decodieren eines empfangenen Signals, das räumlich, zeitlich und/oder frequenzmäßig verteilte Symbole enthält, mit Hilfe einer Raum-Zeit- oder Raum-Frequenz-Codiermatrix, das die folgenden Schritte enthält:

☐ Raum-Zeit- oder Raum-Frequenz-Decodierung (81), die ein decodiertes Signal liefert;
☐ Entzerrung (85) des decodierten Signals, die ein entzerrtes Signal liefert;
☐ erste Schätzung (86) der das Signal bildenden Symbole, die es ermöglicht, ein geschätztes Signal zu liefern; und das mindestens eine Iteration ($87_2$, ..., $87_p$) eines Interferenzaufhebungsschritts ausführt, der die folgenden Unterschritte ausführt:
☐ Subtraktion (1012), vom entzerrten Signal, des geschätzten Signals multipliziert mit einer Interferenzmatrix (1011), die ein optimiertes Signal liefert;
☐ Diversity-Vordecodierung (102) des optimierten Signals invers zu einer beim Senden des Signals ausgeführten Diversity-Vorcodierung, die vordecodierte Daten liefert;

☐ Schätzung (103) der das optimierte Signal bildenden Symbole ausgehend von den vordecodierten Daten, die neue geschätzte Symbole liefert;

☐ Diversity-Vorcodierung (104) gleich der beim Senden ausgeführten Diversity-Vorcodierung, angewendet auf die neuen geschätzten Symbole, um ein neues geschätztes Signal zu liefern, außer bei der letzten Iteration;

**dadurch gekennzeichnet, dass** die erste Schätzung (86) enthält:

- einen Schritt der Diagonalisierung, durch Multiplizieren des entzerrten Signals mit einer Diagonalisierungsmatrix, was zu einer globalen Codier-, Kanal- und diagonalen Decodiermatrix führt, die mindestens die Codiermatrix und eine Decodiermatrix berücksichtigt, entsprechend der konjugiert-transponierten Matrix der Codiermatrix,

- einen Schritt der Verarbeitung der das Signal bildenden Symbole ausgehend vom Diagonalisierungsschritt, der geschätzte Symbole liefert;

- einen Schritt der Diversity-Vorcodierung gleich der beim Senden ausgeführten Diversity-Vorcodierung, der an die geschätzten Symbole angewendet wird, um ein geschätzten Signal zu liefern.

2. Decodierverfahren nach Anspruch 1, **dadurch gekennzeichnet, dass** der Schritt der Verarbeitung der Symbole ebenfalls die folgenden Schritte enthält:

☐ Diversity-Vordecodierung (92) invers zu einer beim Senden des Signals ausgeführten Diversity-Vorcodierung, die durch den Diagonalisierungsschritt gespeist wird und vordecodierte Daten liefert;

☐ Schätzung (93) der das Signal bildenden Symbole ausgehend von den vordecodierten Daten, die die geschätzten Symbole liefert.

3. Decodierverfahren nach Anspruch 2, **dadurch gekennzeichnet, dass** die Schritte der Raum-Zeit-Decodierung und Entzerrung und/oder die Schritte der Entzerrung und Umwandlung gemeinsam durchgeführt werden.

4. Decodierverfahren nach einem der Ansprüche 1 bis 3, **dadurch gekennzeichnet, dass**, wenn die codierten Symbole mit Hilfe von mindestens zwei Antennen gesendet werden, global die verschiedenen entsprechenden Übertragungskanäle berücksichtigt werden.

5. Decodierverfahren nach einem der Ansprüche 2 bis 4, **dadurch gekennzeichnet, dass** der Entzerrungsschritt eine Entzerrung gemäß einer der Techniken ausführt, die zu der Gruppe gehören, die enthält:

- Entzerrung vom Typ "Minimum Mean Square Error" MMSE;
- Entzerrung vom Typ "Equal Gain Combining" EGC;
- Entzerrung vom Typ "Zero Forcing" ZF;
- Entzerrung, die eine Information berücksichtigt, die für das Signal/RauschVerhältnis zwischen dem empfangenen Signal und dem Empfangsrauschen repräsentativ ist.

6. Decodierverfahren nach einem der Ansprüche 2 bis 5, **dadurch gekennzeichnet, dass** die Schritte der Schätzung von Symbolen eine Soft-Decision ausführen, die eine Vertrauensinformation einer Entscheidung zuordnet, und dass der oder die Subtraktionsschritte die Vertrauensinformationen berücksichtigen.

7. Decodierverfahren nach einem der Ansprüche 1 bis 6, **dadurch gekennzeichnet, dass** das empfangene Signal ein Multiträgersignal ist.

8. Decodierverfahren nach einem der Ansprüche 1 bis 7, **dadurch gekennzeichnet, dass** die Vorcodierung durch eine der folgenden Methoden erhalten wird:

- Spektrumsspreizung;
- lineare Vorcodierung.

9. Decodierverfahren nach einem der Ansprüche 1 bis 8, **dadurch gekennzeichnet, dass** es einen Schritt der automatischen Verstärkungssteuerung vor oder nach dem Schritt der Entzerrung und/oder während mindestens einer der Iterationen ausführt.

10. Decodierverfahren nach einem der Ansprüche 1 bis 9, **dadurch gekennzeichnet, dass** es einen Schritt der Kanaldecodierung symmetrisch zu einem Schritt der Kanalcodierung enthält, der beim Senden ausgeführt wird.

**11.** Decodierverfahren nach Anspruch 10, **dadurch gekennzeichnet, dass** der Schritt der Kanaldecodierung eine Turbodecodierung ausführt.

**12.** Decodierverfahren nach einem der Ansprüche 1 bis 11, **dadurch gekennzeichnet, dass** es mindestens einen Schritt der Entschachtelung und mindestens einen Schritt der Wiederverschachtelung enthält, der einer beim Senden ausgeführten Verschachtelung entspricht.

**13.** Decodierverfahren nach einem der Ansprüche 1 bis 12, **dadurch gekennzeichnet, dass** es mindestens einen Schritt der Verbesserung einer Kanalschätzung enthält, der die bei mindestens einer der Iterationen geschätzten Daten berücksichtigt.

**14.** Decodierverfahren nach einem der Ansprüche 1 bis 13, **dadurch gekennzeichnet, dass**, wenn das empfangene Signal mit Hilfe von vier Antennen übertragen wird, die globale Matrix folgenden Wert hat:

$$G = \gamma \begin{bmatrix} A & 0 & 0 & J \\ 0 & A & -J & 0 \\ 0 & -J & A & 0 \\ J & 0 & 0 & A \end{bmatrix}$$

wobei:

$$A = |h_1|^2 + |h_2|^2 + |h_3|^2 + |h_4|^2$$

$$J = 2\operatorname{Re}\{h_1 h_4^* - h_2 h_3^*\},$$

die Interferenz darstellt, und

$$\gamma = \frac{1}{|h_1|^2 + |h_2|^2 + |h_3|^2 + |h_4|^2 + \frac{1}{SNR}}$$

wobei:

$$H = \begin{bmatrix} h_1 & h_2 & h_3 & h_4 \\ -h_2^* & h_1^* & -h_4^* & h_3^* \\ -h_3^* & -h_4^* & h_1^* & h_2^* \\ h_4 & -h_3 & -h_2 & h_1 \end{bmatrix}$$

eine die Raum-Zeit-Codierung und den Übertragungskanal zusammenfassende Matrix ist,
SNR das Signal/Rausch-Verhältnis darstellt, und $h_i$ ein komplexer Schwundkoeffizient des Übertragungskanals zwischen einer der Sendeantennen i und einer Empfangsantenne für $1 \leq i \leq 4$ ist.

**15.** Decodierverfahren nach einem der Ansprüche 1 bis 13, **dadurch gekennzeichnet, dass**, wenn das empfangene Signal mit Hilfe von acht Antennen übertragen wird, die globale Matrix den folgenden Wert hat:

$$G = \gamma \cdot H^H \cdot H = \gamma \begin{bmatrix} A & 0 & 0 & 0 & J & 0 & 0 & 0 \\ 0 & A & 0 & 0 & 0 & J & 0 & 0 \\ 0 & 0 & A & 0 & 0 & 0 & J & 0 \\ 0 & 0 & 0 & A & 0 & 0 & 0 & J \\ J & 0 & 0 & 0 & A & 0 & 0 & 0 \\ 0 & J & 0 & 0 & 0 & A & 0 & 0 \\ 0 & 0 & J & 0 & 0 & 0 & A & 0 \\ 0 & 0 & 0 & J & 0 & 0 & 0 & A \end{bmatrix}$$

mit

$$A = 2 \cdot \left( |h_1|^2 + |h_2|^2 + |h_3|^2 + |h_4|^2 + |h_5|^2 + |h_6|^2 + |h_7|^2 + |h_8|^2 \right)$$

und

$$J = 2\,\mathrm{Re}\left\{ h_1 h_5^* + h_2 h_6^* + h_3 h_7^* + h_4 h_8^* \right\}$$

und

$$\gamma = \frac{1}{2} \cdot \frac{1}{|h_1|^2 + |h_2|^2 + |h_3|^2 + |h_4|^2 + |h_5|^2 + |h_6|^2 + |h_7|^2 + |h_8|^2 + \dfrac{1}{SNR}}$$

wobei

$$H = \begin{bmatrix}
h_1 & h_2 & h_3 & h_4 & h_5 & h_6 & h_7 & h_8 \\
h_2 & -h_1 & h_4 & -h_3 & h_6 & -h_5 & h_8 & -h_7 \\
h_3 & -h_4 & -h_1 & h_2 & h_7 & -h_8 & -h_5 & h_6 \\
h_4 & h_3 & -h_2 & -h_1 & h_8 & h_7 & -h_6 & -h_5 \\
h_1^* & h_2^* & h_3^* & h_4^* & h_5^* & h_6^* & h_7^* & h_8^* \\
h_2^* & -h_1^* & h_4^* & -h_3^* & h_6^* & -h_5^* & h_8^* & -h_7^* \\
h_3^* & -h_4^* & -h_1^* & h_2^* & h_7^* & -h_8^* & -h_5^* & h_6^* \\
h_4^* & h_3^* & -h_2^* & -h_1^* & h_8^* & h_7^* & -h_6^* & -h_5^* \\
h_5 & h_6 & h_7 & h_8 & h_1 & h_2 & h_3 & h_4 \\
h_6 & -h_5 & h_8 & -h_7 & h_2 & -h_1 & h_4 & -h_3 \\
h_7 & -h_8 & -h_5 & h_6 & h_3 & -h_4 & -h_1 & h_2 \\
h_8 & h_7 & -h_6 & -h_5 & h_4 & h_3 & -h_2 & -h_1 \\
h_5^* & h_6^* & h_7^* & h_8^* & h_1^* & h_2^* & h_3^* & h_4^* \\
h_6^* & -h_5^* & h_8^* & -h_7^* & h_2^* & -h_1^* & h_4^* & -h_3^* \\
h_7^* & -h_8^* & -h_5^* & h_6^* & h_3^* & -h_4^* & -h_1^* & h_2^* \\
h_8^* & h_7^* & -h_6^* & -h_5^* & h_4^* & h_3^* & -h_2^* & -h_1^*
\end{bmatrix}$$

eine die Raum-Zeit-Codierung und den Übertragungskanal zusammenfassende Matrix ist,

$H^H$ die konjugierte Transponierte der Matrix H ist,

SNR das Signal/Rausch-Verhältnis darstellt, und $h_i$ ein komplexer Schwundkoeffizient des Übertragungskanals zwischen einer der Sendeantennen i und einer Empfangsantenne für $1 \leq i \leq 8$ ist.

**16.** Decodierverfahren nach Anspruch 1, **dadurch gekennzeichnet, dass** der Schritt der Verarbeitung der Symbole ebenfalls die folgenden Schritte enthält:

☐ Demodulation (204) symmetrisch zu einer beim Senden ausgeführten Modulation;
☐ Entschachtelung (205) symmetrisch zu einer beim Senden ausgeführten Verschachtelung;
☐ Kanaldecodierung (206) symmetrisch zu einer beim Senden ausgeführten Kanalcodierung;
☐ Wiederverschachtelung (207) gleich der beim Senden ausgeführten;
☐ erneute Modulation gleich der beim Senden ausgeführten, die die geschätzten Symbole liefert.

**17.** Empfänger, der Einrichtungen zur Decodierung eines empfangenen Signals, das räumlich, zeitlich und/oder frequenzmäßig verteilte Symbole enthält, mit Hilfe einer Raum-Zeit- oder Raum-Frequenz-Codiermatrix anwendet, der enthält:

☐ Einrichtungen zur Raum-Zeit- oder Raum-Frequenz-Decodierung, die ein decodiertes Signal liefern;
☐ Einrichtungen zur Entzerrung des decodierten Signals, die ein entzerrtes Signal liefern;
☐ erste Einrichtungen zur Schätzung der das Signal bildenden Symbole, die das Liefern eines geschätzten Signals ermöglichen;
☐ Einrichtungen zum Subtrahieren, vom entzerrten Signal, des geschätzten Signals multipliziert mit einer Interferenzmatrix, die ein optimiertes Signal liefern;
☐ Einrichtungen zur Diversity-Vordecodierung des optimierten Signals invers zu einer beim Senden des Signals ausgeführten Diversity-Vorcodierung, die vordecodierte Daten liefern;
☐ zweite Einrichtungen zur Schätzung der das optimierte Signal bildenden Symbole ausgehend von den vordecodierten Daten, die neue geschätzte Symbole liefern;
☐ Einrichtungen zur Diversity-Vorcodierung gleich der beim Senden ausgeführten Diversity-Vorcodierung, angewendet an die neuen geschätzten Symbole, um ein neues geschätztes Signal zu liefern;

wobei die Einrichtungen mindestens einmal für jedes Symbol angewendet werden, **dadurch gekennzeichnet, dass** die ersten Schätzeinrichtungen enthalten:

- Einrichtungen zur Diagonalisierung durch Multiplikation des entzerrten Signals mit einer Diagonalisierungsmatrix, was zu einer globalen Codier-, Kanal- und diagonalen Decodiermatrix führt, die mindestens die Codiermatrix und eine Decodiermatrix berücksichtigt, entsprechend der konjugiert-transponierten Matrix der Codiermatrix,
- Einrichtungen zur Verarbeitung der das Signal bildenden Symbole ausgehend von den Diagonalisierungseinrichtungen, die geschätzte Symbole liefern;
- Einrichtungen zur Diversity-Vorcodierung gleich der beim Senden ausgeführten Diversity-Vorcodierung, angewendet an die geschätzten Symbole, um ein geschätztes Signal zu liefern.

18. Codier- und Decodierverfahren, **dadurch gekennzeichnet, dass** die Codierung eine Raum-Zeit-Codiermatrix einsetzt, derart, dass:
    or

$$H = \begin{bmatrix} h_1 & h_2 & h_3 & h_4 & h_5 & h_6 & h_7 & h_8 \\ h_2 & -h_1 & h_4 & -h_3 & h_6 & -h_5 & h_8 & -h_7 \\ h_3 & -h_4 & -h_1 & h_2 & h_7 & -h_8 & -h_5 & h_6 \\ h_4 & h_3 & -h_2 & -h_1 & h_8 & h_7 & -h_6 & -h_5 \\ h_1^* & h_2^* & h_3^* & h_4^* & h_5^* & h_6^* & h_7^* & h_8^* \\ h_2^* & -h_1^* & h_4^* & -h_3^* & h_6^* & -h_5^* & h_8^* & -h_7^* \\ h_3^* & -h_4^* & -h_1^* & h_2^* & h_7^* & -h_8^* & -h_5^* & h_6^* \\ h_4^* & h_3^* & -h_2^* & -h_1^* & h_8^* & h_7^* & -h_6^* & -h_5^* \\ h_5 & h_6 & h_7 & h_8 & h_1 & h_2 & h_3 & h_4 \\ h_6 & -h_5 & h_8 & -h_7 & h_2 & -h_1 & h_4 & -h_3 \\ h_7 & -h_8 & -h_5 & h_6 & h_3 & -h_4 & -h_1 & h_2 \\ h_8 & h_7 & -h_6 & -h_5 & h_4 & h_3 & -h_2 & -h_1 \\ h_5^* & h_6^* & h_7^* & h_8^* & h_1^* & h_2^* & h_3^* & h_4^* \\ h_6^* & -h_5^* & h_8^* & -h_7^* & h_2^* & -h_1^* & h_4^* & -h_3^* \\ h_7^* & -h_8^* & -h_5^* & h_6^* & h_3^* & -h_4^* & -h_1^* & h_2^* \\ h_8^* & h_7^* & -h_6^* & -h_5^* & h_4^* & h_3^* & -h_2^* & -h_1^* \end{bmatrix}$$

und $h_i$ ein komplexer Schwundkoeffizient des Übertragungskanals zwischen einer Sendeantenne i und einer Empfangsantenne für $1 \leq i \leq 8$ ist,
und dass die Decodierung eine Decodierung nach Anspruch 15 ist.

Fig. 1

Fig. 2

Diagonalisation

$$x \longrightarrow \boxed{\Phi} \xrightarrow{\hat{S}^{(0)}} \boxed{\begin{array}{c}\text{Estimation}\\\text{des symboles}\end{array}} \xrightarrow{\bar{S}^{(0)}}$$

31

Fig. 3

Annulation
d'interférences

411

41

42

$$\bar{S}^{(p-1)} \longrightarrow \boxed{J_4}$$

$$X \longrightarrow \oplus \xrightarrow{\hat{S}^{(p)}} \boxed{\begin{array}{c}\text{Estimation}\\\text{de symboles}\\\text{décision}\end{array}} \xrightarrow{\bar{S}^{(p)}}$$

$\tilde{X}^{(p)}$

412

Fig. 4

MISO 4x1,2 bits/Hz

Fig. 5

Fig. 6

Fig. 7

81

82

S → Précodage → Entrelacement → Code espace temps

$E_1$ $h_1$

$E_2$ $h_2$

$E_n$ $h_n$

$R_1$

r

n

83

Décodage espace temps → Egalisation MMSE → x → Module ite 1 (diagonalisation) → $\overline{s}^{(0)}$

86

84

85

Module ite 2 ( AI ) → $\overline{s}^{(1)}$

$87_2$

$87_p$

$\overline{s}^{(p-1)}$

Module ite p ( AI ) → $\overline{s}^{(p)}$

Fig. 8

Fig. 9

Fig. 10

MISO 4x1, précodage 64,2 bits/Hz

Legend: Lin, Ite1, AWGN, optimum, Ite2

Fig. 11

Fig. 12

EP 1 661 286 B1

Diagonalisation

**x** → Φ → Ŝ⁽⁰⁾ → | Désétalement CDMA suivant l'ensemble des codes utilisés | 131 → | Estimation de symboles | 93 → | Etalement CDMA suivant l'ensemble des codes utilisés | 132 → S̄⁽⁰⁾

91

<u>Fig. 13</u>

Annulation
d'interférences

S̄⁽ᵖ⁻¹⁾ → J₄

101

X → ⊕ (+ / −) → X̃⁽ᵖ⁾ → Ŝ⁽ᵖ⁾ → | Désétalement CDMA suivant l'ensemble des codes utilisés | 141

→ | Estimation de symboles | 103

→ | Etalement CDMA suivant l'ensemble des codes utilisés | 142 → S̄⁽ᵖ⁾

<u>Fig. 14</u>

49

Fig. 15

EP 1 661 286 B1

Fig. 16

Diagonalisation

**x** → Φ → Démodulation → Entrelacement$^{-1}$ → Décodage de canal →

$\hat{S}^{(0)}$

171

172

173

174

→ Entrelacement → Modulation →

175

176

## Fig. 17

Annulation
d'interférences

1813

$\overline{S}^{(p-1)}$ → J$_4$ → 1811

**X** → ⊕ → $\hat{S}^{(p)}$ → Démodulation → Entrelacement$^{-1}$ →

$\tilde{X}^{(p)}$

1812

182

183

→ Décodage de canal →

184

→ Entrelacement → Modulation →

185

186

## Fig. 18

Fig. 19

Fig. 20

Annulation
d'interférences

2113

2111

$\overline{S}^{(p-1)}$ → $J_4$

X

−

+

⊕

2112

$\hat{S}^{(p)}$ → Entrelacement$^{-1}$ → Précodage$^{-1}$ → Démodulation

212    213    214

Entrelacement$^{-1}$ → Décodage de canal → Entrelacement

215    216    217

Modulation → Précodage → Entrelacement

218    219    2110

Fig. 21

223

| Décodage espace temps |
| Module ite 1 (diagonalisation + égalisation) |

221

| Egalisation MMSE |

| Module ite 2 ( AI ) |

222

224p

224₁

x

$\overline{S}^{(p-1)}$

| Module ite p ( AI ) |

## Fig. 22

231

232

| Diagonalisation + égalisation |

$\hat{S}^{(1)}$

| Estimation symboles |

## Fig. 23

Fig. 24

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1133071 A

**Littérature non-brevet citée dans la description**

- **Tujkovic D.** Recursive Space-Time Treillis Codes for Turbo coded Modulation. *IEEE GLOBECOM,* 2000, vol. 2, 1010-1015
- **Jayaweera S.K. ; Poor H.V.** Turbo (iterative) decoding of a unitary space-time code with a convolutional code. *IEEE VTC Spring,* 2002, vol. 2, 1020-1024
- **Guillen i Fabregas A. ; Caire G.** Analysis and design of natural and threaded space-time codes with iterative decoding. *Conference on Signals, Systems and Computers,* 2002, vol. 1, 279-283
- **G. Bauch ; N. Al-Dahir.** Reduced-complexity Space-Time Turbo-Equalization for Frequency-Selective MIMO Channels. *IEEE journal on Selected areas in communications,* 2002
- **Boariu A. ; Ionescu M.** A class of nonorthogonal rate-one space-time block codes with controlled interference. *IEEE trans. on wireless comm.,* Mars 2003, vol. 2, 270-276
- **Tirkkonen O. ; Boariu A. ; Hottinen A.** Minimal non-orthogonality rate 1 space-time block code for 3+ tx antennas. *proceedings of IEEE ISSTA,* Septembre 2000
- **Jafarkhani H.** A Quasi-Orthogonal Space-Time Block Code. *IEEE WCNC,* 2000, vol. 1, 1457-1458
- **Alamouti S. M.** A Simple Transmitter Diversity Scheme for Wireless Communications. *IEEE JSAC,* Octobre 1998, 1457-1458
- **Tarokh V. ; Jafarkhani H. ; Calderbanck R.** Space-time block coding for wireless communications: performance results. *IEEE JSAC,* Mars 1999, vol. 17, 451-460
- **V. Le Nir ; M. Hélard.** Reduced-complexity space-time block coding and decoding schemes with block linear precoding. *Electronics Letters,* 10 Juillet 2003, vol. 39 (14